(19) Europäisches Patentamt
European Patent Office
Office européen des brevets

(11) **EP 4 357 746 A1**

(12) **EUROPEAN PATENT APPLICATION**
published in accordance with Art. 153(4) EPC

(43) Date of publication:
**24.04.2024  Bulletin 2024/17**

(21) Application number: **22824600.5**

(22) Date of filing: **24.03.2022**

(51) International Patent Classification (IPC):
**G01M 3/02** (2006.01)      **G06T 7/00** (2017.01)

(52) Cooperative Patent Classification (CPC):
**G01N 21/3504; G01M 3/38; G06T 7/00;**
G01N 2021/3531; G01N 2201/0221;
G01N 2201/1296

(86) International application number:
**PCT/JP2022/013879**

(87) International publication number:
**WO 2022/264604 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2021  JP 2021100464**

(71) Applicant: **KONICA MINOLTA, INC.**
**Tokyo 100-7015 (JP)**

(72) Inventors:
• **ASANO, Motohiro**
**Tokyo, 100-7015 (JP)**
• **MORIMOTO, Takashi**
**Tokyo, 100-7015 (JP)**
• **TAKAMURA, Shunsuke**
**Tokyo, 100-7015 (JP)**
• **KIUCHI, Mikako**
**Tokyo, 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **GAS CONCENTRATION FEATURE QUANTITY ESTIMATION DEVICE, GAS CONCENTRATION FEATURE QUANTITY ESTIMATION METHOD, PROGRAM, AND GAS CONCENTRATION FEATURE QUANTITY INFERENCE MODEL GENERATION DEVICE**

(57)    A gas concentration feature quantity estimation device 20 includes: an inspection data acquisition unit 211, 212 that acquires time-series pixel group inspection data and a temperature value of a gas, the time-series pixel group inspection data being region-extracted from inspection data of a gas distribution moving image representing an existence region of the gas in a space, and having two or more pixels in a vertical direction and a horizontal direction, respectively; and an estimation unit 2151 that calculates an estimation value of a gas concentration feature quantity corresponding to the time-series pixel group inspection data acquired by the inspection data acquisition unit using an inference model, which is machine-learned using time-series pixel group training data of the gas distribution moving image having the same size as the time-series pixel group inspection data, and a gas temperature value and a value of the gas concentration feature quantity corresponding to the time-series pixel group training data as training data.

EP 4 357 746 A1

# FIG. 4

(a)

(b)

**Description**

Technical Field

The present disclosure relates to a gas concentration feature quantity estimation device and a gas concentration feature quantity estimation method, and relates to a method for estimating a gas concentration feature quantity based on an infrared captured image.

Background Art

In facilities that use gases (hereinafter, also referred to as "gas facilities"), such as production facilities that produce natural gas and oil, production plants that produce chemical products using gases, gas pipe transmission facilities, petrochemical plants, thermal power plants, and iron and steel facilities, risks of gas leakage due to aged deterioration and operational errors of the facilities have been recognized, and a gas detection device is provided to minimize the gas leakage.

Regarding the gas detection, in addition to a gas detection device using a fact that electrical characteristics of a detection probe are changed by contact of gas molecules with the detection probe, an optical gas leakage detection method has been adopted in which an infrared moving image is captured using infrared absorption characteristics of gas to detect gas leakage in an inspection region in recent years.

Since the gas detection method by the infrared moving image can visualize the gas by the image, the method has an advantage that an emission state of a flow of the gas or the like and a leakage position can be easily detected as compared with the conventional detection probe method. In addition, since the state of the leaked gas is recorded as the image, the method has an advantage that the image can be used as evidence of occurrence of gas leakage and restoration thereof.

As this type of infrared gas detection device, for example, Patent Literature 1 discloses a technique of estimating a concentration length product by specifying a background temperature when gas is present and the background temperature when gas is not present by detecting an amplitude characteristic in a time-series luminance change for each pixel in an infrared image obtained by capturing a monitoring target.

Citation List

Patent Literature

Patent Literature 1: WO 2017/104617 A1

Summary of Invention

Technical Problem

It is necessary to accurately estimate a concentration length product for estimating a flow rate of the gas in the gas facility or the like.

However, since an object to be imaged is mechanically vibrated by mechanical vibration generated during operation in a gas plant or the petrochemical plant, mechanical vibration noise may be included in a captured infrared image. Alternatively, since mechanical vibration noise is sometimes transmitted from the gas facility or the like to the imaging device, the captured infrared image may be affected by the mechanical vibration noise. In these cases, a luminance change for each pixel is detected even when there is no gas distribution because of the luminance change for each pixel caused by the vibration noise. Therefore, there is a concern that the accuracy of the feature quantity related to a calculated gas concentration is reduced due to an influence of the mechanical vibration noise existing in a measurement environment as a problem peculiar to a non-contact gas detection by the infrared image.

An aspect of the present disclosure has been made in view of the above problems, and an object thereof is to provide a gas concentration feature quantity estimation device, a gas concentration feature quantity estimation method, a program, and a gas concentration feature quantity inference model generation device capable of reducing an influence of mechanical vibration noise on measurement and accurately detecting a feature quantity representing a gas concentration in a space from an infrared gas distribution moving image.

Solution to Problem

A gas concentration feature quantity estimation device according to an aspect of the present disclosure includes:

an inspection data acquisition unit that acquires time-series pixel group inspection data of a gas distribution moving image, and a temperature value of a gas, the time-series pixel group inspection data being region-extracted from inspection data of the gas distribution moving image representing an existence region of the gas in a space, and having two or more pixels in a vertical direction and a horizontal direction, respectively; and an estimation unit that calculates a gas concentration feature quantity corresponding to the time-series pixel group inspection data acquired by the inspection data acquisition unit using an inference model, the inference model being machine-learned using time-series pixel group training data of the gas distribution moving image having the same size as the time-series pixel group inspection data, and a gas temperature value and a value of the gas concentration feature quantity corresponding to the time-series pixel group training data as training data.

Advantageous Effects of Invention

According to an aspect of the present disclosure, it is possible to provide a gas concentration feature quantity estimation device, a gas concentration feature quantity estimation method, a program, and a gas concentration feature quantity inference model generation device capable of reducing an influence of mechanical vibration noise on measurement and accurately detecting a feature quantity representing a gas concentration in a space from an infrared gas distribution moving image.

As a result, even in a case where mechanical vibration noise is observed in a gas facility to be inspected or in an environment where mechanical vibration noise is transmitted from the gas facility or the like to an imaging device, it is possible to accurately detect the feature quantity indicating the gas concentration in the space.

Brief Description of Drawings

Fig. 1 is a schematic configuration diagram of a gas concentration feature quantity estimation system 1 according to an embodiment.

Fig. 2 is a schematic view illustrating a relationship between a gas visualization imaging device 10 and an inspection object 300.

Fig. 3 is a diagram illustrating a circuit configuration of a gas concentration feature quantity estimation device 20.

Fig. 4(a) is a functional block diagram of a control unit 21, and Fig. 4(b) is a functional block diagram of a machine learning unit 2151 in the control unit 21.

Fig. 5(a) is a diagram illustrating an aspect of time-series pixel group inspection data of a gas distribution moving image region-extracted from inspection data of the gas distribution moving image, Fig. 5(b) is a diagram illustrating an aspect of time-series pixel group training data of a gas distribution moving image region-extracted from training data of the gas distribution moving image, and Fig. 5(c) is a schematic diagram illustrating an aspect of a gas concentration feature quantity estimated from the time-series pixel group inspection data of the gas distribution moving image.

Fig. 6(a) is a schematic diagram illustrating an aspect of time-series pixel group data of a gas distribution moving image when there is no influence of mechanical vibration noise, and Fig. 6(b) is a schematic diagram illustrating an aspect of the time-series pixel group data of the gas distribution moving image when there is an influence of the mechanical vibration noise.

Fig. 7(a) is a schematic diagram illustrating a temporal change in luminance values in time-series pixel group data of a gas distribution moving image when affected by mechanical vibration noise, and Fig. 7(b) is a schematic diagram illustrating a positional change in the luminance values in the time-series pixel group data.

Fig. 8(a) is a schematic diagram illustrating a temporal change in luminance values representing a gas distribution in time-series pixel group data of a gas distribution moving image, and Fig. 8(b) is a schematic diagram illustrating a positional change in the luminance values representing the gas distribution in the time-series pixel group data.

Figs. 9(a) to 9(d) are diagrams illustrating a method of calculating a concentration length product from an optical absorption coefficient.

Fig. 10 is a flowchart illustrating an operation of the gas concentration feature quantity estimation device 20 in a learning phase.

Fig. 11 is a flowchart illustrating an operation of the gas concentration feature quantity estimation device 20 in an operation phase.

Fig. 12(a) is an example of a gas distribution moving image of an inspection target, Fig. 12(b) is an example of an inspection target image of an optical absorption image, and Fig. 12(c) is an example of a processing result of the optical absorption image.

Fig. 13 is a diagram illustrating a circuit configuration of a machine learning data generation device 30.

Fig. 14 is a functional block diagram of a control unit 31.

Fig. 15(a) is a schematic diagram illustrating a data structure of three-dimensional structure data DTstr, and Fig. 15(b) is a schematic diagram illustrating a data structure of three-dimensional gas distribution image data DTgas.

Fig. 16 is a schematic view for explaining an outline of a calculation method of a concentration length product in two-dimensional single viewpoint gas distribution image conversion processing.

Fig. 17 is a schematic diagram for explaining an outline of a calculation method of a concentration length product under a condition that a structure is present in a two-dimensional single viewpoint gas distribution image conversion processing.

Fig. 18(a) is a schematic diagram illustrating an outline of concentration length product image data, Fig. 18(b) is a schematic diagram for explaining an outline of a calculation method of a concentration length product in an optical absorption coefficient image conversion processing, and Fig. 18(c) is a schematic diagram illustrating an outline of optical absorption coefficient image data.

Fig. 19(a) is a schematic diagram illustrating an outline of three-dimensional structure data, Fig. 19(b) is a schematic diagram illustrating an outline of extracted background portion data, and Fig. 19(c) is a conceptual diagram illustrating a method of generating background image data based on the background portion data.

Fig. 20(a) is a schematic diagram illustrating an outline of background image data, Fig. 20(b) is a schematic diagram illustrating an outline of optical absorption coefficient image data, and Fig. 20(c) is a schematic diagram illustrating an outline of optical intensity image data.

Fig. 21 is a flowchart illustrating an outline of a two-dimensional single viewpoint gas distribution image conversion processing.

Fig. 22 is a flowchart illustrating an outline of a background image generation processing.

Fig. 23 is a flowchart illustrating an outline of an optical intensity image data generation processing.

Description of Embodiments

<<Embodiment>>

<Configuration of gas concentration feature quantity estimation system 1>

An embodiment of the present disclosure is realized as a gas concentration feature quantity system 1 that analyzes gas leakage from a gas leakage inspection image of a gas facility. The gas concentration feature quantity system 1 according to the embodiment will be described in detail below with reference to the drawings.

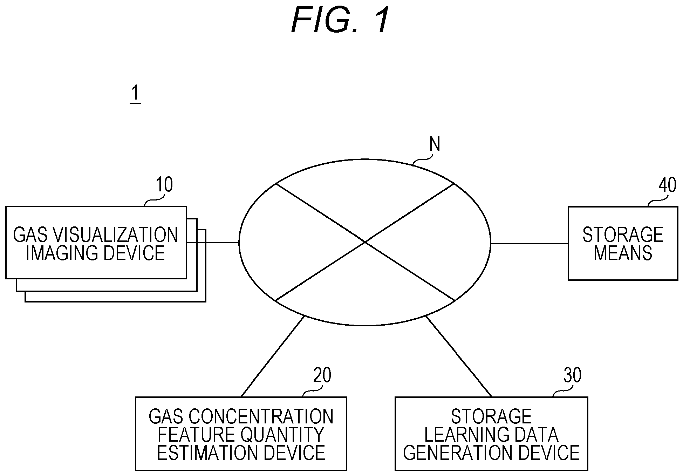

Fig. 1 is a schematic configuration diagram of the gas concentration feature quantity system 1 according to the embodiment. As illustrated in Fig. 1, the gas concentration feature quantity system 1 includes a plurality of gas visualization imaging devices 10, a gas concentration feature quantity estimation device 20, a machine learning data generation device 30, and a storage means 40 connected to a communication network N.

The communication network N is, for example, the Internet, and the gas visualization imaging device 10, the gas concentration feature quantity estimation device 20, a plurality of the machine learning data generation devices 30, and the storage means 40 are connected so as to be able to exchange information with each other.

<Gas visualization imaging device 10>

The gas visualization imaging device 10 is a device or a system that images a monitoring target using infrared rays and provides an infrared image in which gas is visualized, and may have aspects of an installation type installed in the gas facility or the like, a portable type that can be carried by an inspector, a drone mounted type, or the like. The gas visualization imaging device 10 includes, for example, an imaging means (not illustrated) including an infrared camera that detects infrared ray and takes an image, and an interface circuit (not illustrated) that outputs data to the communication network N.

The infrared camera is an infrared imaging device that generates an infrared image based on an infrared light and outputs the infrared image to the outside. The infrared camera can be used as a leaked gas visualization imaging device that visualizes gas leakage from the gas facility by capturing an infrared moving image of the gas in air using infrared absorption characteristics of the gas, for example as described in a known document (e.g., JP 2012 -58093 A).

An image by the infrared camera is generally used for detecting a hydrocarbon-based gas. For example, so-called infrared camera is provided with an image sensor having a sensitivity wavelength band in at least a part of an infrared light wavelength of 3 $\mu$m to 5 $\mu$m, and can detect hydrocarbon-based gases such as methane, ethane, ethylene, and propylene by detecting and imaging infrared light having a wavelength of, for example, 3.2 to 3.4 $\mu$m. Alternatively, different types of gases such as carbon monoxide can be detected by using infrared light having the wavelength of 4.52 to 4.67 $\mu$m.

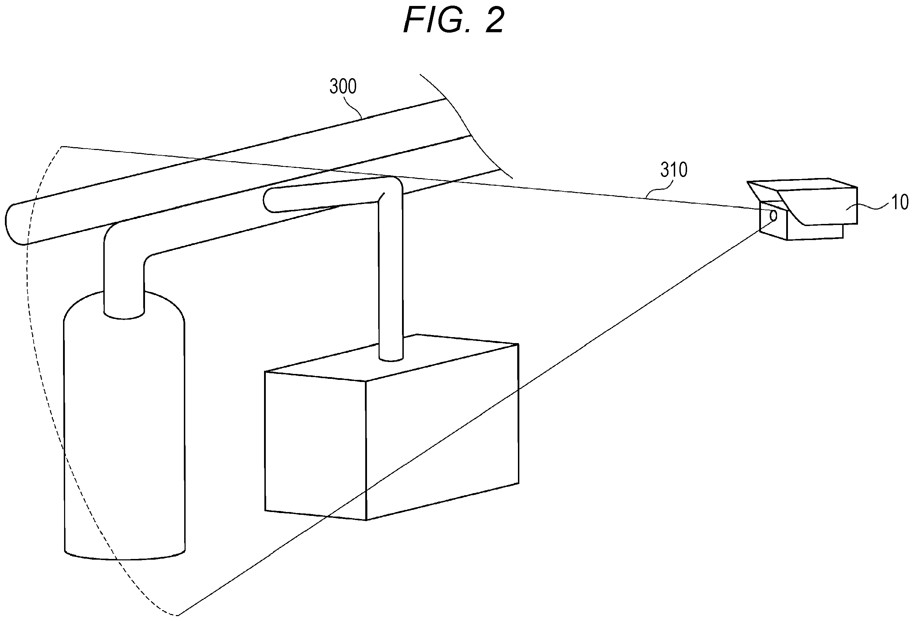

Fig. 2 is a schematic diagram illustrating a relationship between the gas visualization imaging device 10 and an inspection object 300. As illustrated in Fig. 2, the gas visualization imaging device 10 is installed such that the inspection object 300 is included in a visual field range 310 of the infrared camera. The acquired inspection image is, for example, a video signal for transmitting an image of 30 frames per second. The gas visualization imaging device 10 converts the captured image into a predetermined video signal. In the present embodiment, the infrared image signal acquired from the infrared camera is processed as a moving image including a plurality of frames by restoring the video signal to an image. The image is an infrared photograph of a monitoring target, and has an intensity of infrared ray as a pixel value.

Note that if the size of the gas distribution image or the number of frames as a moving image is excessive, the calculation amount of machine learning and determination based on machine learning increases. In the embodiment, the number of pixels of the gas distribution image is, for example, $320 \times 256$ pixels, and the number of frames is, for example, 100.

The gas visualization imaging device detects the presence of gas by capturing a change in an amount of electromagnetic wave emitted from a background object having an absolute temperature of 0 (K) or more. The change in the amount of electromagnetic wave is mainly caused by an absorption of electromagnetic wave in an infrared region by the gas or generation of blackbody radiation from the gas itself. Since the gas leakage can be captured as an image by capturing the space to be monitored by the gas visualization imaging device 10, the gas leakage can be detected at an earlier stage, and the location of the gas can be accurately captured.

The visualized inspection image is temporarily stored in a memory or the like, transferred to the storage means 40 via the communication network N according to an operation input, and stored.

Note that the gas visualization imaging device 10 is not limited to this, and may be any imaging device as long as it can detect the gas to be monitored, and for example, may be a general visible light camera as long as the monitoring target is gas that can be detected by visible light, such as white smoked water vapor.

<Storage means 40>

The storage means 40 is a storage device that stores the inspection images transmitted from the gas visualization imaging device 10, includes a nonvolatile memory such as a hard disk, and stores the inspection images and the optical absorption coefficient images in association with the identification information of the gas visualization imaging device 10. The administrator can read the infrared image from the storage means 40 using a management terminal (not illustrated) or the like and grasp a state of the infrared image to be browsed.

<Gas concentration feature quantity estimation device 20>

The gas concentration feature quantity estimation device 20 is a device that acquires an inspection image capturing a monitoring target from the gas visualization imaging device 10, estimates a gas feature quantity based on the inspection image, and notifies a user of gas detection through a display 24. The gas concentration feature quantity estimation device 20 is realized, for example, as a general computer including a central processing unit (CPU), a random access memory (RAM), and a program executed by them. As described later, the gas concentration feature quantity estimation device 20 may further include a graphics processing unit (GPU) and the RAM as calculation devices.

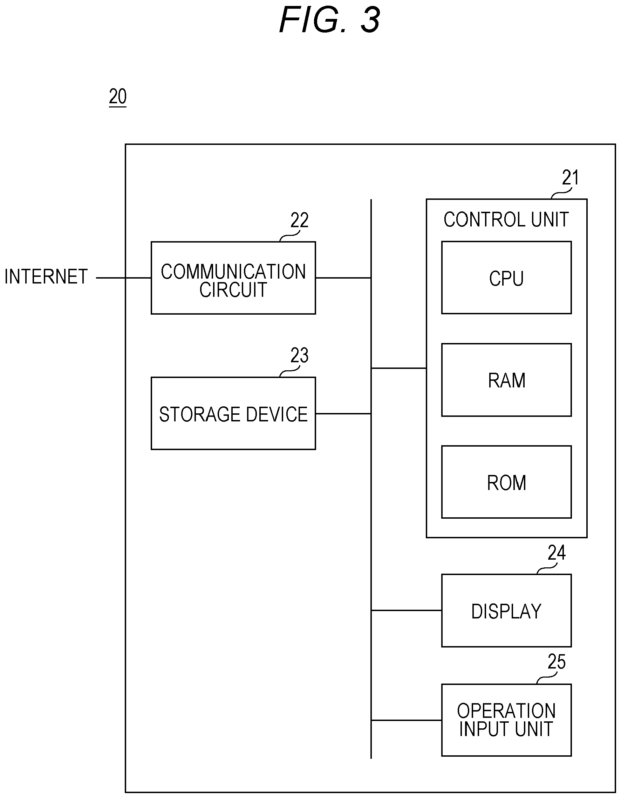

The following will describe a configuration of the gas concentration feature quantity estimation device 20. Fig. 3 is a diagram illustrating a circuit configuration of the gas concentration feature quantity estimation device 2.

The gas concentration feature quantity estimation device 20 is a server computer for estimating an optical absorption coefficient based on an inspection image. The gas concentration feature quantity estimation device 20 reads the inspection image stored in the storage means 40, or receives the acquired inspection image from the gas visualization imaging device 10, estimates the optical absorption coefficient of the inspection image to generate an optical absorption coefficient image, outputs the optical absorption coefficient image to the storage means 40 via the communication network N, and stores the optical absorption coefficient image.

Fig. 3 is a schematic configuration diagram illustrating a circuit configuration of the gas concentration feature quantity estimation device 20. As illustrated in Fig. 3, the gas concentration feature quantity estimation device 20 includes a control unit 21, a communication circuit 22, a storage device 23, the display 24, and an operation input unit 25.

The display 24 is, for example, a liquid crystal panel or the like, and displays a screen generated by the control unit 21.

The operation input unit 25 is an input device that accepts an input by the operator to operate the gas concentration feature quantity estimation device 20. For example, the operation input unit 25 may be an input device such as a keyboard and a mouse, or may be realized as one device that doubles as a display device and an input device such as a touch panel in which a touch sensor is disposed on the front surface of the display 24.

The control unit 21 includes the CPU, the RAM, and a ROM, and the CPU executes a program (not illustrated) stored in the ROM to implement each function of the gas concentration feature quantity estimation device 20. Specifically, the control unit 21 estimates the gas concentration feature quantity of the gas distribution image based on the inspection image acquired from the communication circuit 22, creates an image of the gas concentration feature quantity, and outputs the image of the gas concentration feature quantity to the communication circuit 22. Specifically, an optical absorption coefficient image or a gas concentration length product image is created by estimating an optical absorption coefficient or a gas concentration length product as the gas concentration feature quantity, and is output to the communication circuit 22.

[Estimation of gas concentration feature quantity]

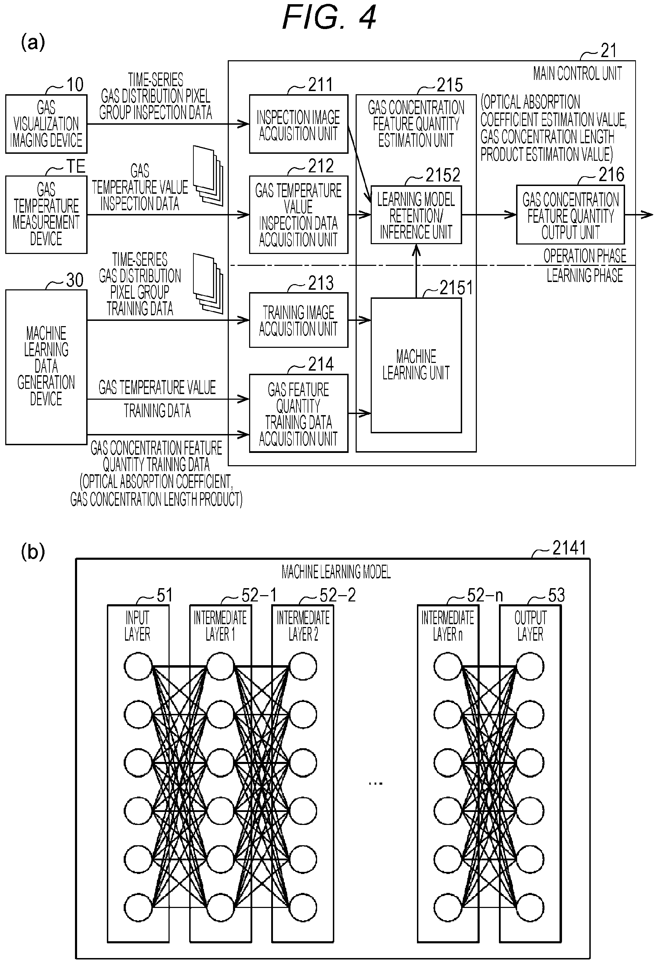

Fig. 4(a) is a functional block diagram of the control unit 21.

As illustrated in Fig. 4(a), the gas concentration feature quantity estimation device 20 includes an inspection image acquisition unit 211, a gas temperature value inspection data acquisition unit 212, a training image acquisition unit 213, a gas feature quantity training data acquisition unit 214, a machine learning unit 2151, a learning model retention/inference unit 2152, and a gas concentration feature quantity output unit 216. The machine learning unit 2151 and the learning model retention/inference unit 2152 constitute a gas concentration feature quantity estimation unit 215.

The inspection image acquisition unit 211 is a circuit that acquires pixel group inspection data of the gas distribution moving image (hereinafter, it may be referred to as "gas distribution pixel group inspection data") from the gas visualization imaging device 10. The device that captures image data into a processing device such as a computer, for example an image capture board, can be used.

The inspection data of the gas distribution moving image is the infrared image having sensitivity to a wavelength of 3.2 to 3.4 $\mu$m imaged by the infrared camera, and may be, for example, the image obtained by visualizing a gas leakage portion of an inspection target, or may be, for example, a luminance signal indicating a gas existence region in the space so as to have a high concentration. The size of the image may be, for example, 320 $\times$ 256 in vertical $\times$ horizontal pixel numbers. The inspection data of the gas distribution moving image is the moving image including time-series data of a plurality of frames. Gain adjustment, offset adjustment, image inversion processing, and the like may be performed as necessary for subsequent processing.

The pixel group inspection data is the inspection data that is region-extracted from the inspection data of the gas distribution moving image and has two or more pixels in a vertical direction and a horizontal direction, respectively. Furthermore, the pixel group inspection data may include a pixel group having a smaller number of pixels than the number of pixels of the frame of the gas distribution moving image. This is because the smaller the number of pixels of the pixel group inspection data, the more regions can be region-extracted from one inspection image and learned, and the number of pieces of inspection image data for learning can be reduced, and further, when the number of pixels of the pixel group inspection data is large, various background variations need to be prepared and learned. Specifically, the time-series pixel group inspection data preferably has the number of frame pixels in which the numbers of vertical and horizontal pixels are 3 or more and 7 or less, respectively. For example, the pixel group inspection data may have the number of vertical $\times$ horizontal pixels of 4 $\times$ 4 and the frames of N (N is a natural number), and N may be about 100 frames assuming 10 frames per second (fps) and 10 seconds.

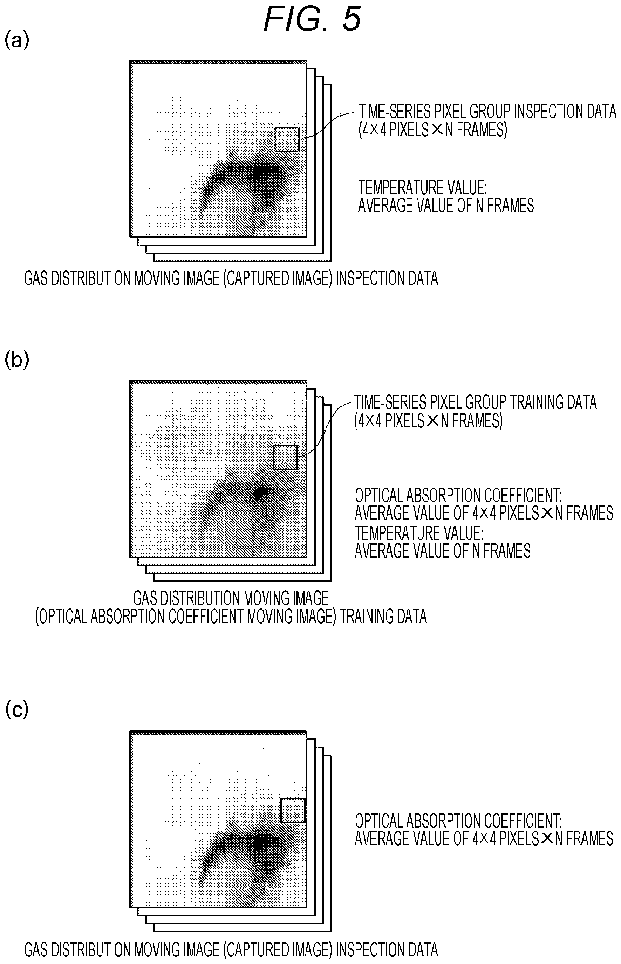

Fig. 5(a) is a diagram illustrating an aspect of the time-series pixel group inspection data of the gas distribution moving image region-extracted from the inspection data of the gas distribution moving image. When the gas type is the hydrocarbon-based gas such as methane gas, the inspection data of the gas distribution moving image captured by the infrared camera and the pixel group inspection data have an aspect as illustrated in Fig. 5(a).

The gas temperature value inspection data acquisition unit 212 is a circuit that acquires a gas temperature value corresponding to the pixel group inspection data of the gas distribution image. It is assumed that a captured luminance value is input to the captured image, and a value obtained by converting a temperature value measured by a thermometer into a luminance value is input to the gas temperature, but the values may be input as temperature values. The gas temperature value may be a value obtained by converting temperature measurement data measuring the temperature of the gas atmosphere using a thermometer TE at the time of capturing the gas distribution moving image into the luminance value. In the present example, as illustrated in Fig. 5(a), an average value of 4 $\times$ 4 pixels and N frames in the time-series pixel group inspection data is used. The pixel group inspection data and the inspection data of the gas temperature value are the image and the temperature value related to the image that are captured and measured under the same condition.

Data set including the pixel group inspection data and the gas temperature value inspection data is output to the inference unit 2152 as inspection target data in the inference unit 2152.

The training image acquisition unit 213 is a circuit that receives the input of time-series pixel group training data of the gas distribution moving image region-extracted from the gas distribution moving image generated by the machine learning data generation device 30. Fig. 5(b) is a diagram illustrating an aspect of the time-series pixel group training data of the gas distribution moving image region-extracted from the training data of the gas distribution moving image when the optical absorption coefficient image is used as the gas distribution moving image. As illustrated in Fig. 5(b), the time-series pixel group training data is the image having the same format as the pixel group inspection data generated by the gas visualization imaging device 10, and is the moving image including time-series data of a plurality of frames. Here, the time-series pixel group training data preferably has the number of frame pixels in which the numbers of vertical and horizontal pixels are 3 or more and 7 or less, respectively. For example, the pixel group training data may have the number of vertical × horizontal pixels of 4 × 4 and the frames of N (N is a natural number), and N may be about 100 frames assuming 10 frames per second (fps) and 10 seconds.

Furthermore, learning is effectively performed by changing the number of frame pixels of the time-series pixel group training data depending on the magnitude of vibration noise. For example, in the case of 3 × 3 pixels, it is possible to learn the influence in a case where there is the vibration noise of less than one pixel in the vertical or horizontal direction. With 4 × 4, it is possible to learn the influence in the case where there is the vibration noise up to about 1.5 pixels in the vertical or horizontal direction. In the case of 7 × 7 pixels, it is possible to learn the influence of a shift of less than three pixels in the vertical or horizontal direction.

The gas feature quantity training data acquisition unit 214 is a circuit that acquires the gas temperature value and the gas concentration feature quantity training data corresponding to the time-series pixel group training data region-extracted from the gas distribution moving image generated by the machine learning data generation device 30 as representative values for the time-series pixel group training data. The time-series pixel group training data, the gas temperature value, and the gas concentration feature quantity are the image and parameters regarding the image generated under the same condition. As illustrated in Fig. 5(b), an average value (an average value of N frames) corresponding to the time-series pixel group training data may be used as the temperature value.

As the gas temperature value, the gas temperature value corresponding to the luminance of the time-series pixel group training data may be used. Furthermore, as the gas concentration feature quantity, the optical absorption coefficient or the gas concentration length product corresponding to the time-series pixel group training data may be used.

The optical absorption coefficient is an absorption rate of light when gas exists in the space, and is represented by 0 to 1 where 0 indicates the state without gas. The optical absorption coefficient can be converted into the concentration length product by a spectral absorption coefficient of the gas. As illustrated in Fig. 5(b), an average value (an average value for 4 × 4 pixels × N frames) corresponding to the time-series pixel group training data may be used as the optical absorption coefficient and the concentration length product.

The data set including training data of the time-series pixel group training data, the training data of the gas temperature value, and the training data of the gas concentration feature quantity is output to the machine learning unit 2151.

Note that, in the case where the acquired time-series pixel group training data does not have the same format as the pixel group inspection data acquired by the inspection image acquisition unit 211, the training image acquisition unit 213 may perform processing such as cutting out or scaling so that the time-series pixel group training data has the same format.

The machine learning unit 2151 is a circuit that executes machine learning and generates an inference model based on the data set including the time-series pixel group training data region-extracted from the training data of the gas distribution moving image received by the training image acquisition unit 213, and the gas temperature value and the gas concentration feature quantity corresponding to the time-series pixel group training data received by the gas feature quantity training data acquisition unit 214. The inference model is formed so as to estimate the gas concentration feature quantity of the gas distribution moving image based on the pixel group inspection data of the gas distribution moving image and the gas temperature value and the gas concentration feature quantity of the gas distribution moving image.

As the machine learning, for example, a convolutional neural network (CNN) can be used, and known software such as PyTorch can be used.

Fig. 4(b) is a schematic diagram illustrating an outline of a logical configuration of a machine learning model. The machine learning model includes an input layer 51, an intermediate layer 52-1, an intermediate layer 52-2, ..., an intermediate layer 52-n, and an output layer 53, and interlayer filters are optimized by learning. For example, when the number of pixels of the gas distribution moving image is 4 × 4 pixels and the number of frames is 100, the input layer 51 receives a 4 × 4 × 100 three-dimensional tensor to which the pixel value of the gas distribution moving image is input. The intermediate layer 52-1 is, for example, a convolution layer, and receives the 4 × 4 × 100 three-dimensional tensor generated by a convolution operation from data of the input layer 51. The intermediate layer 52-2 is, for example, a pooling layer, and receives a three-dimensional tensor obtained by resizing the data of the intermediate layer 52-1. The intermediate layer 52-n is, for example, a fully connected layer, and converts the data of the intermediate layer 52-(n - 1) into a two-dimensional vector indicating a coordinate value. Note that a configuration of the intermediate layers is an example, and the number n of the intermediate layers is about 3 to 5, but is not limited thereto. In Fig. 4(b), the number of neurons in each layer is the same, but each layer may have any number of neurons. The machine learning unit 2151 receives the data set including the time-series pixel group training data, the training data of the gas temperature value, and the training data of the gas concentration feature quantity as an input, performs learning whit the gas concentration feature quantity as correct data, generates a machine learning model, and outputs the machine learning model to the learning model retention/inference unit 2152. When the gas concentration feature quantity estimation device 20 includes the GPU and the RAM as a calculation device, the machine learning unit 2151 may be realized by the GPU and software.

In general, a processing system capable of executing processing close to human shape recognition or recognition with respect to temporal change is configured by automatically adjusting parameters such as convolution filter processing used in image recognition or the like through a learning process in the machine learning. In the machine learning model of the gas concentration feature quantity estimation device 20 according to the present embodiment, it is possible to configure the inference model for estimating the gas concentration feature quantity corresponding to the pixel group inspection data by extracting specific frequency component data appearing in the time-series pixel group training data and estimating the relationship between the luminance value of the specific frequency component data and the gas temperature value and the gas concentration feature quantity.

The optical absorption coefficient and the concentration length product are parameters that can be calculated by estimating the with-gas background temperature and the without-gas background temperature from the temporal change for each pixel as described in a known document, for example, Patent Literature 1. Therefore, the gas feature quantity training data acquisition unit 214 is configured to acquire an average value of frames in the time-series pixel group training data as the training data.

However, there is a problem that the inference model based on the time-series pixel group training data is affected by the mechanical vibration noise, and the accuracy of the calculated gas concentration feature quantity decreases.

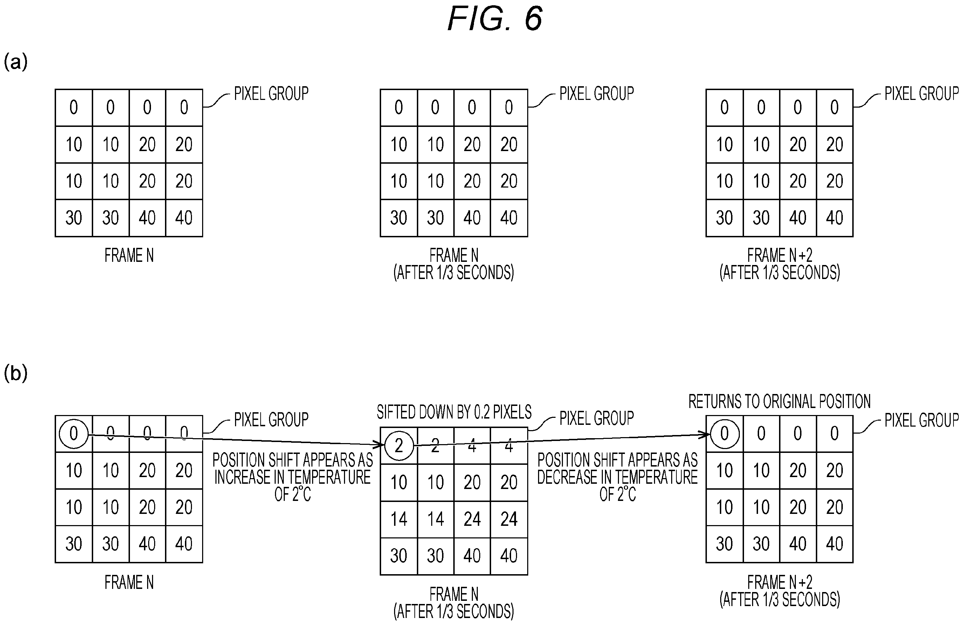

Fig. 6(a) is a schematic diagram illustrating an aspect of time-series pixel group data of a gas distribution moving image in a case where there is no influence of the mechanical vibration noise, and Fig. 6(b) is a schematic diagram illustrating an aspect of time-series pixel group data of a gas distribution moving image when there is an influence of the mechanical vibration noise.

In a case where there is no influence of the mechanical vibration noise, there is no change in the luminance value of each pixel between consecutive frames of the time-series pixel group data of the gas distribution moving image as illustrated in Fig. 6(a). On the other hand, in a case where there is the influence of the mechanical vibration noise, the luminance value of each pixel reversibly changes between the consecutive frames of the time-series pixel group data of the gas distribution moving image, as illustrated in Fig. 6(b). In the example illustrated in Fig. 6(b), the luminance values of the pixels in the first and third rows downward in the frame N increase by the luminance value corresponding to 2°C or 4°C with respect to the frames N - 1 and N + 1. That is, the luminance change of the pixel is detected in these pixels even if there is no gas distribution due to the luminance change accompanying the vibration noise.

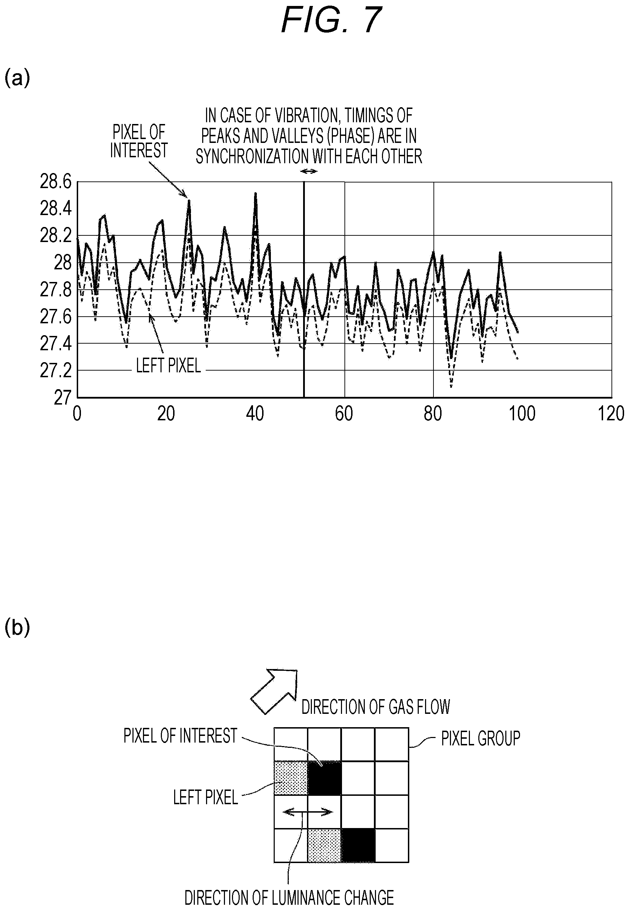

Fig. 7(a) is a schematic diagram illustrating the temporal change of the luminance value in the time-series pixel group data of a gas distribution moving image when affected by the mechanical vibration noise, and Fig. 7(b) is a schematic diagram illustrating a positional change of the luminance value in time-series pixel group data. As illustrated in Fig. 7(a), the change in luminance under the influence of the mechanical vibration noise is observed as the change in luminance in the same phase at the same timing of variations in the time direction, and as illustrated in Fig. 7(b), the direction of change in the luminance value in the pixel group data is independent of the direction of gas flow and is usually different from the direction of the gas flow.

On the other hand, the change in the luminance value indicating the gas distribution takes a different aspect.

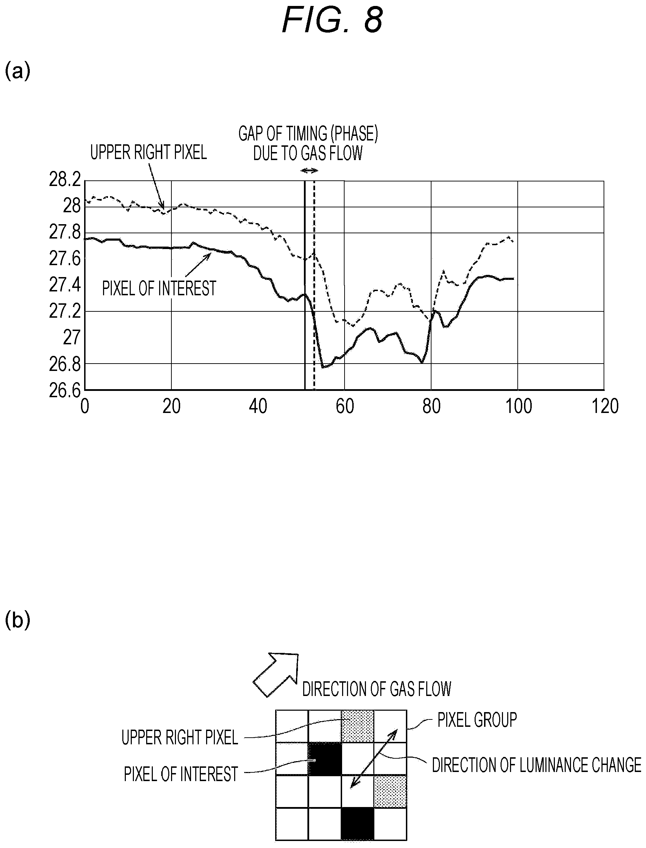

Fig. 8(a) is a schematic diagram illustrating the temporal change in the luminance values representing the gas distribution in time-series pixel group data of the gas distribution moving image, and Fig. 8(b) is a schematic diagram illustrating the positional change in the luminance values representing the gas distribution in the time-series pixel group data. As illustrated in Fig. 8(a), the luminance change indicating the gas distribution is observed as the luminance change accompanied by the shift of the timing (phase) due to the gas flow, and as illustrated in Fig. 8(b), the direction of the change in the luminance value in the pixel group data is the same as the direction of the gas flow. As described above, by using time-series information including a plurality of pixel groups, it is possible to distinguish between the luminance change due to the mechanical vibration noise and the luminance change due to the gas flow.

Therefore, it is possible to reduce the influence of the mechanical vibration noise by performing the machine learning using the information of the number of pixels that can determine whether the timings are aligned by at least the mechanical vibration noise or the phases are not aligned due to the influence of the gas flow, instead of using only the information of the temporal change as the input.

The learning model retention/inference unit 2152 is a circuit that retains the machine learning model generated by the machine learning unit 2151, performs inference using the machine learning model, then estimates and outputs the gas concentration feature quantity corresponding to the pixel group inspection data of the gas distribution moving image acquired by the inspection image acquisition unit 211. In the present embodiment, the optical absorption coefficient or the gas concentration length product as the gas concentration feature quantity is specified and output as the average value of the pixel group inspection data of the input gas distribution moving image.

[Parameter conversion between gas concentration feature quantities]

The gas concentration feature quantity output unit 216 is a circuit that generates a display image for displaying the second image output by the learning model retention/inference unit 2152 on the display 24. Fig. 5(c) is a schematic diagram illustrating an aspect of the gas concentration feature quantity estimated from the time-series pixel group inspection data of the gas distribution moving image when the optical absorption coefficient image is used as the gas distribution moving image. An average value of the optical absorption coefficients of $4 \times 4$ pixels and N frames in the time-series pixel group inspection data is output.

Here, the optical absorption coefficient can be converted into the concentration length product by the spectral absorption coefficient of the gas.

In the case of a learning device using the concentration length product, it is possible to directly calculate the concentration length product by creating a learned model for a specific gas type such as methane. On the other hand, in the case of the optical absorption coefficient, the concentration length products of various gas types can be calculated by specifying the gas type later.

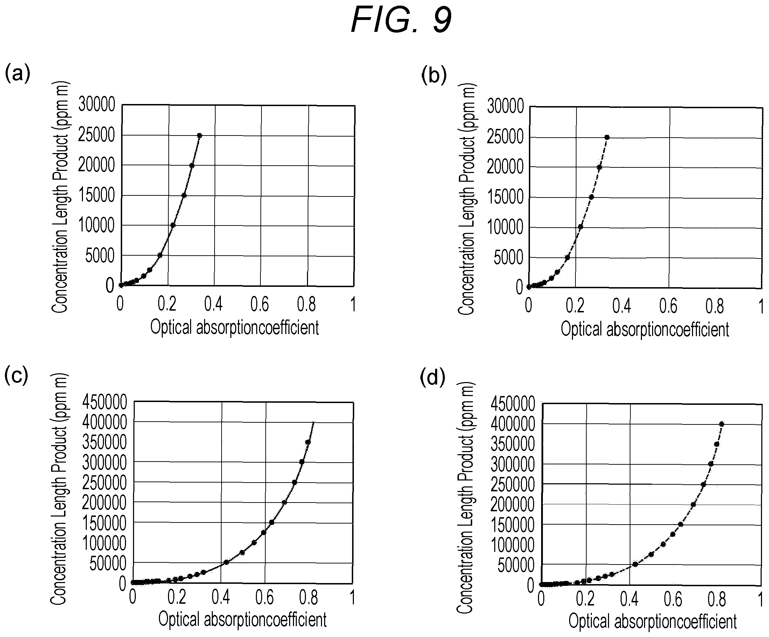

Figs. 9(a) to 9(d) are diagrams illustrating methods of calculating the concentration length product from the optical absorption coefficient.

The method illustrated in Fig. 9(a) is the method of experimentally acquiring data on the relationship between the optical absorption coefficient and the concentration length product for each gas type in advance. For example, the optical absorption coefficient is measured using a gas cell in which gas having a predetermined concentration length product is enclosed, and the measurement is repeated while changing the concentration length product of the enclosed gas, thereby acquiring data on the relationship between the optical absorption coefficient and the concentration length product. Then, the concentration length product is obtained by interpolation processing using the acquired relationship data. An interpolation processing method such as spline interpolation may be used as the interpolation processing. In Fig. 9(a), black circles indicate data on methane gas actually measured using the gas cell, and black solid line indicates result of cubic spline interpolation. It can be seen that a cubic spline coefficient is calculated with a section between the measurement points, the concentration length product values corresponding to the optical absorption coefficient values are obtained, and the interpolation is satisfactorily performed.

The method illustrated in Fig. 9(b) is the method in which data on the relationship between the optical absorption coefficient and the concentration length product is experimentally acquired in advance for each gas type, mathematical parameter fitting is performed from the acquired relationship data, and an approximate expression for calculating the concentration length product from the optical absorption coefficient is obtained. In Fig. 9(b), black circles are data on methane gas actually measured using the gas cell, and a black dotted line is an interpolation result by an approximate expression obtained by mathematical parameter fitting based on the measurement data, and it can be seen that the interpolation is good.

The method illustrated in Fig. 9(c) is the method of acquiring data on the relationship between the optical absorption coefficient and the concentration length product by theoretical calculation for the gas type for which an optical absorption line database can be used. For example, since the spectral absorption coefficient can be obtained in detail by using an optical absorption line database called HITRAN, data on the relationship between the optical absorption coefficient and the concentration length product can be acquired by calculating the optical absorption coefficient while changing the concentration length product value. In Fig. 9(c), black circles indicate data on methane gas obtained using HITRAN, and a black solid line indicates the result of cubic spline interpolation. It can be seen that interpolation is satisfactorily performed by calculating the cubic spline coefficient with the section between measurement points and obtaining the concentration length product values corresponding to the optical absorption coefficient values.

In the method illustrated in Fig. 9(d), the data on the relationship between the optical absorption coefficient and the concentration length product is acquired by the same method as in Fig. 9(c), and the interpolation of the acquired relationship data is performed by the same method as in Fig. 9(b). In Fig. 9(d), black circles are data on methane gas obtained using HITRAN, and a black dotted line is the interpolation result by the approximate expression obtained by the mathematical parameter fitting based on this data, and it can be seen that the interpolation is performed satisfactorily.

Even when the gas type is different like propane gas, the concentration length product can be calculated by a similar calculation method.

In addition, even in a case where the learning device for estimating a methane concentration length product is created, the output methane gas concentration length product can be converted into the optical absorption coefficient by the above methods, and further converted into a propane gas concentration length product as another gas type.

As described above, according to the gas concentration feature quantity estimation device 20, the optical absorption coefficient independent of the gas type can be calculated as the gas concentration feature quantity, and the concentration length product in the specific gas type can be obtained based on the calculated optical absorption coefficient.

Alternatively, by adopting a configuration in which the gas concentration feature quantity is the gas concentration length product, a method of directly obtaining a concentration length product in which the specific gas type is specified as the gas concentration feature quantity may be adopted. Accuracy can be improved and calculation can be simplified when the gas type is determined.

(Operation of gas concentration feature quantity estimation device)

The following will describe the operation of the gas concentration feature quantity estimation device 20 according to the present embodiment with reference to the drawings.

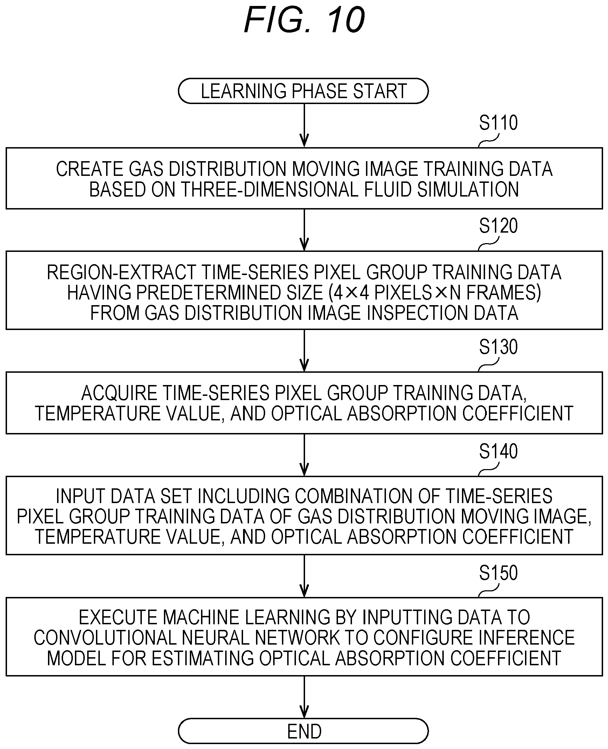

Fig. 10 is a flowchart illustrating the operation of the gas concentration feature quantity estimation device 20 in the learning phase. In the following description, the method for configuring the inference model for estimating the optical absorption coefficient as the gas concentration feature quantity will be described. However, the gas concentration length product may be estimated as the gas concentration feature quantity by replacing the optical absorption coefficient in the following processing with the gas concentration length product.

First, the gas distribution moving image training data is created based on the three-dimensional fluid simulation (step S110). Three-dimensional optical reflection image data may be based on three-dimensional optical illumination analysis simulation. For example, three-dimensional concept modeling of the gas facility is performed using commercially available three-dimensional computer-aided design (CAD) software, three-dimensional optical illumination analysis simulation is performed using commercially available software for the three-dimensional optical illumination analysis simulation in consideration of a structure model, and three-dimensional optical reflection image data obtained as the simulation result is converted into a two-dimensional image observed from a predetermined viewpoint position to generate the gas distribution moving image training data.

At this time, the learning phase uses the image including the with-gas region and the without-gas region using subjects having different background temperatures. In addition, the image without the vibration noise and the image in which the vibration noise is generated are combined on one image to create learning data. The image in which the vibration noise is generated is created by generating background data accompanied by the vibration noise by vibrating the original background data in a plane direction by simulation, and superimposing the gas distribution image on the background data accompanied by the vibration noise.

Next, from the gas distribution image training data, the time-series pixel group training data having a predetermined size ($4 \times 4$ pixels $\times N$ frames) is region-extracted (step S 120).

Next, the temperature value and the optical absorption coefficient of the gas corresponding to the time-series pixel group training data are calculated (step S 130). The temperature value and the optical absorption coefficient of the gas may be average values of $4 \times 4$ pixels $\times N$ frames in the time-series pixel group training data.

Next, the data set including a combination of the time-series pixel group training data of the gas distribution image, the temperature value, and the optical absorption coefficient is acquired. The time-series pixel group training data is acquired as the training image by the training image acquisition unit 213, and the corresponding temperature value and the optical absorption coefficient are acquired as correct answer data by the gas feature quantity training data acquisition unit 214. At this time, the image data subjected to processing such as gain adjustment may be acquired as necessary.

Next, the inference model for estimating the optical absorption coefficient is configured by inputting data to the convolutional neural network and executing machine learning (step S 150). As a result, the parameters are optimized by trial and error by deep learning, and a machine-learned model is created. The created machine-learned model is retained in the learning model retention/inference unit 2152.

By the above operation, the inference model for estimating the optical absorption coefficient is created based on the characteristics of the time-series pixel group training data of the gas distribution image.

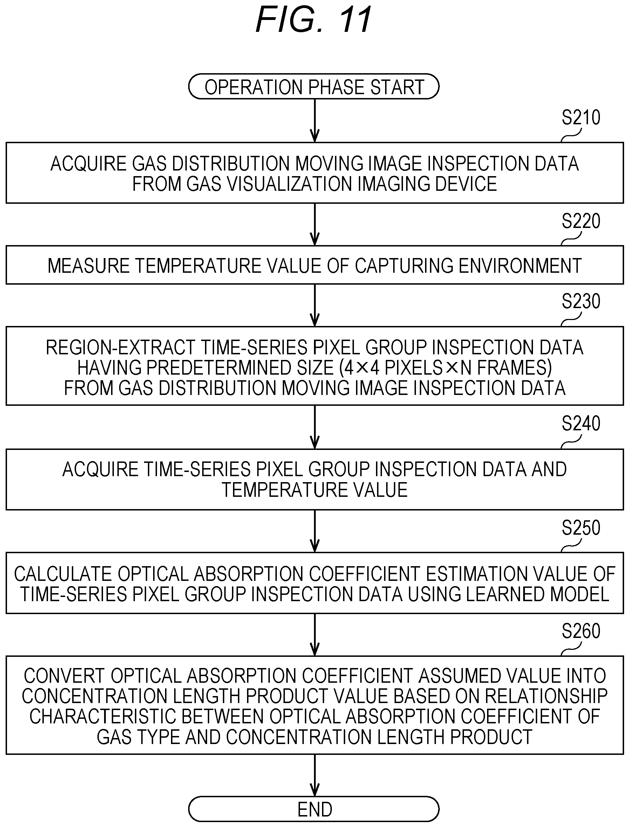

Fig. 11 is a flowchart illustrating an operation of the gas concentration feature quantity estimation device 20 in the operation phase.

First, the gas distribution moving image inspection data acquired by the gas visualization imaging device 10 is acquired (step S210), and the temperature value of the capturing environment is measured (step S220). The inspection image of the gas distribution moving image is the infrared image captured by the infrared camera of the gas visualization imaging device 10, and is the moving image showing the gas distribution obtained by visualizing the gas leakage portion to be inspected.

Next, from the gas distribution image data, the time-series pixel group inspection data of the predetermined size ($4 \times 4$ pixels $\times N$ frames) is region-extracted (step S230). A part of each frame of the captured image may be cut out so as to include all the pixels in which the gas is detected, and the time-series pixel group inspection data may be generated as the frame of the gas distribution image.

Next, the data set including a combination of the time-series pixel group inspection data of the gas distribution image and the temperature value is acquired (step S240). The time-series pixel group inspection data is acquired as an inspection target image by the inspection image acquisition unit 211, and the corresponding temperature value is acquired by the gas temperature value inspection data acquisition unit 212. At this time, the image data subjected to processing such as gain adjustment may be acquired as necessary. The time-series pixel group inspection data is the image data having the same format as the time-series pixel group training data, and includes the time-series data of the plurality of frames. Subtraction of an offset component or gain adjustment may be performed on the inspection image.

Next, the optical absorption coefficient estimation value of the time-series pixel group inspection data is calculated using the learned model (step S250). By using the machine-learned inference model created in step S150, the optical absorption coefficient is estimated based on the characteristics of the time-series pixel group training data of the gas distribution image as the input.

Next, the optical absorption coefficient assumed value is converted into the concentration length product value based on the relationship characteristic between the optical absorption coefficient and the concentration length product of the gas type (step S260).

Thus, the estimation of the gas concentration feature quantity is completed.

(Evaluation test)

A performance evaluation test has been performed using the gas concentration feature quantity estimation device according to the embodiment. The result will be described below using images.

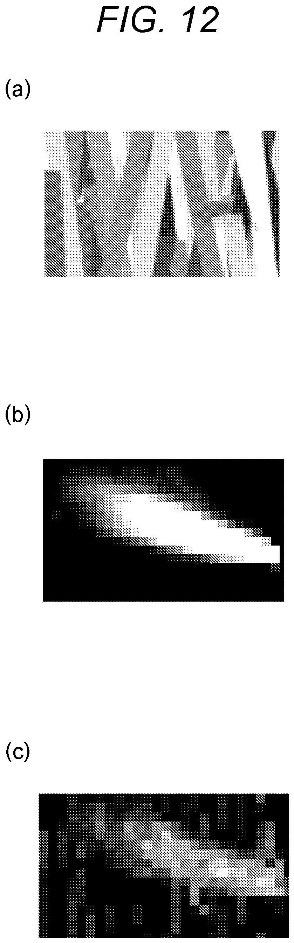

Fig. 12(a) is an example of the gas distribution moving image of the inspection target. As illustrated in Fig. 12(a), the gas distribution moving image of the inspection target is one frame image of the time-series inspection data in which a gas image corresponding to the optical absorption coefficient image of Fig. 12(b) is superimposed on the background image of a rod-shaped object extending vertically. In this example, the inspection image has $112 \times 64$ pixels in the vertical $\times$ horizontal directions and 100 frames. Furthermore, a high-pixel frame image having a movement amount of an integer is generated for each frame as the vibration noise, and the frame image is reduced to $112 \times 64$ pixels after the movement, thereby giving a vibration shift of the subpixel. Specifically, the vibration noise of normal distribution amplitude (unit pixel) having average value of X direction: 0.473 and Y direction: 0.362, and standard deviation of X direction: 0.486 and Y direction: 0.378 is given. Note that, in Fig. 12(a) is created by creating a background image having the vibration shift without gas, and then superimposing the gas image corresponding to the optical absorption coefficient image of Fig. 12(b).

Fig. 12(b) is an example of the inspection target image (correct image) of the optical absorption image, represents the optical absorption coefficient image of the gas superimposed on the gas distribution moving image of Fig. 12(a), and is the data of $28 \times 16$ pixels per frame. From this inspection target image, it is possible to region-extract the time-series pixel group inspection data having a $4 \times 4$ pixel region as one pixel.

Fig. 12(c) is an example of a processing result of the optical absorption image. Fig. 12(c) is an output image and the data of $28 \times 16$ pixels per frame. The output image is obtained by dividing the time-series pixel group inspection data of the optical absorption coefficient image shown in Fig. 12(b) into $28 \times 16$ regions ($4 \times 4$ pixels per region), inputting the luminance value 14387 (16-bit value) corresponding to the gas temperature to each region, calculating the gas concentration feature quantity, and outputting the gas concentration feature quantity as one gas concentration feature quantity image.

As shown in Fig. 12(c), it can be seen that the vibration noise and the gas can be properly determined.

(Summary)

As described above, it is possible to distinguish between the luminance change due to the mechanical vibration noise and the luminance change due to the gas flow by using the time-series information including the plurality of pixel groups in the present embodiment. As a result, it is possible to reduce the influence of the mechanical vibration noise by performing the machine learning using the information of the number of pixels that can determine whether the timings are aligned due to the mechanical vibration noise or the phases are not aligned due to the influence of the flow of the gas.

That is, in the gas concentration feature quantity estimation device 20, by setting the time-series pixel group inspection data and the training data of the gas distribution moving image to the time-series pixel group inspection data having two or more pixels in the vertical and horizontal directions, respectively, and by detecting the presence or absence of the timing (phase) shift of the luminance change in the time-series pixel group data, it is possible to configure the inference model that can distinguish whether the luminance change in the time-series pixel group data is due to the mechanical vibration noise not accompanied by the phase shift or the luminance change is due to the gas flow accompanied by the phase shift, and it is possible to improve the accuracy of the calculated the gas concentration feature quantity.

<Machine learning data generation device 30>

Next, a configuration of the machine learning data generation device 30 will be described.

[Generation of concentration length product image data]

The learning data used in the learning phase can also be prepared using the simulation. First, a three-dimensional simulation of gas diffusion is performed using a fluid simulation, and a time-series change in three-dimensional concentration distribution data of gas is obtained. Next, a viewpoint is set at a predetermined position, and a concentration length product (integrated value in a distance direction from the viewpoint of the concentration distribution on a visual line) is obtained while the visual line is scanned over an angular region including the space where the gas exists with respect to the three-dimensional concentration distribution data at a certain time, and two-dimensional concentration length product distribution data at that time, that is, the concentration length product image is obtained. By repeating the above-described processing while changing the time, it is possible to obtain the time-series data including a plurality of concentration length product image frames.

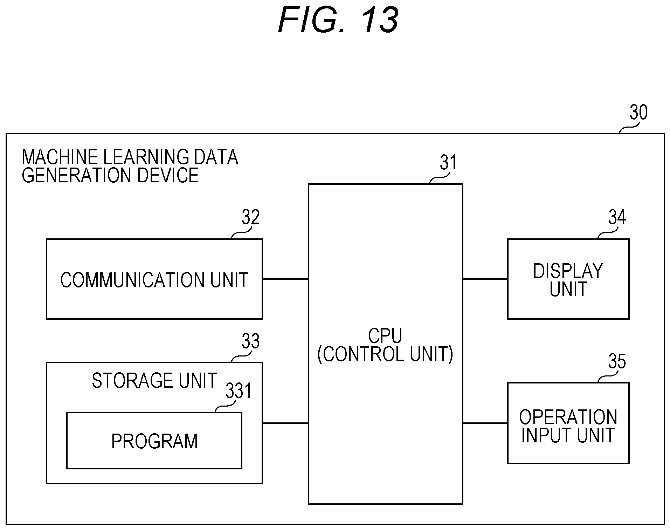

Fig. 13 is a diagram illustrating the configuration of the machine learning data generation device 30. As illustrated in Fig. 13, the machine learning data generation device 30 includes a control unit (CPU) 31, a communication unit 32, a storage unit 33, a display unit 34, and an operation input unit 35, and is realized as the computer that executes a machine learning data generation program by the control unit 31.

The storage unit 33 stores a program 331 and the like necessary for the machine learning data generation device 30 to operate, and has a function as a temporary storage area for temporarily storing a calculation result of the control unit 31. The communication unit 32 transmits and receives the information to and from the machine learning data generation device 30 and the storage means 40. The display unit 34 is, for example, a liquid crystal panel or the like, and displays a screen generated by the CPU 31.

The control unit 31 implements the function of the machine learning data generation device 30 by executing the machine learning data generation program 331 in the storage unit 33.

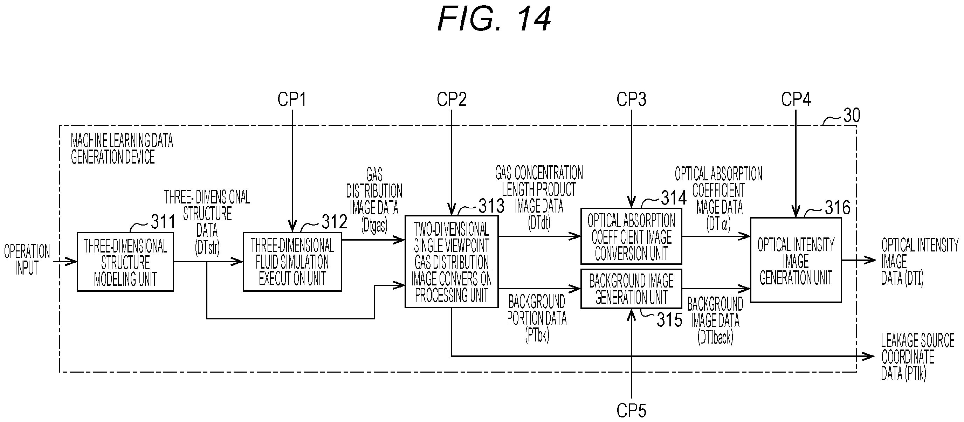

Fig. 14 is a functional block diagram of the machine learning data generation device 30. The condition parameters necessary for the processing input in each functional block in Fig. 14(b) are as follows.

[Table 1]

| Condition parameter | Examples of parameter |
| --- | --- |
| CP1 | Gas type, gas flow rate, flow velocity, flow direction, shape of gas leakage source, diameter of gas leakage |
| CP2 | Imaging device angle of view, line-of-sight direction, distance, image resolution |
| CP3 | Gas type |
| CP4 | Gas temperature |
| CP5 | Background two-dimensional temperature distribution, background surface spectral emissivity, background surface spectral reflectance, illumination light wavelength distribution, spectral illuminance, illumination angle |

As illustrated in Fig. 14, the machine learning data generation device 30 includes a three-dimensional structure modeling unit 311, a three-dimensional fluid simulation execution unit 312, a two-dimensional single viewpoint gas distribution image conversion processing unit 313, an optical absorption coefficient image conversion unit 314, a background image generation unit 315, and an optical intensity image generation unit 316.

The three-dimensional structure modeling unit 311 performs three-dimensional structure model design according to the operation input to the operation input unit 35 from the operator, performs the three-dimensional structure modeling for laying out a structure in a three-dimensional space, and outputs three-dimensional structure data DTstr to the subsequent stage. The three-dimensional structure data DTstr is, for example, shape data representing a three-dimensional shape of piping and other plant facilities. For the three-dimensional structure modeling, commercially available three-dimensional computer-aided design (CAD) software can be used.

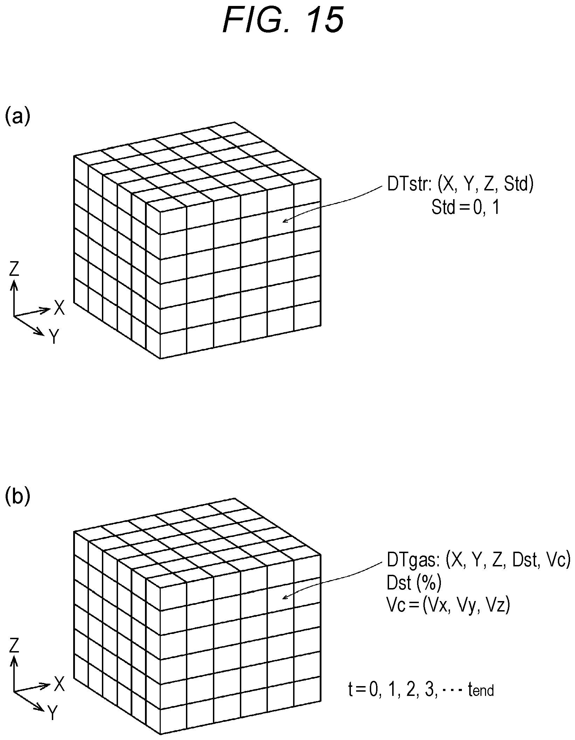

Fig. 15(a) is a schematic diagram illustrating a data structure of the three-dimensional structure data DTstr. Here, in the present description, the X direction, the Y direction, and the Z direction in each drawing are defined as a width direction, a depth direction, and a height direction, respectively. As illustrated in Fig. 15(a), the three-dimensional structure data DTstr is three-dimensional voxel data representing a three-dimensional space, and includes structure identification information Std arranged at coordinates in the X direction, the Y direction, and the Z direction. Since the structure identification information Std is expressed as three-dimensional shape data, for example, the structure identification information Std may be recorded as a binary image of 0 and 1 such as "with structure" or "without structure".

The three-dimensional fluid simulation execution unit 312 acquires the three-dimensional structure data DTstr as the input, and further acquires the condition parameter CP 1 necessary for the fluid simulation according to the operation input to the operation input unit 35 from the operator. The condition parameter CP1 is, for example, the parameter that defines setting conditions necessary for the fluid simulation mainly related to the gas leakage, such as the gas type, a gas flow rate, a gas flow velocity in a three-dimensional space, the shape, the diameter, and the position of a gas leakage source, as described in Table 1. It is possible to generate a large number of pieces of learning data by generating images while changing various kinds of these condition parameters.

Then, the three-dimensional fluid simulation is performed in the three-dimensional space in which the three-dimensional structure modeling is completed, and three-dimensional gas distribution image data DTgas is generated and output to the subsequent stage. The three-dimensional gas distribution image data DTgas is the data including at least a three-dimensional gas concentration distribution. The calculation is performed using commercially available software for the three-dimensional fluid simulation, and for example, ANSYS Fluent, Flo EFD, and Femap/Flow may be used.

Fig. 15(b) is a schematic diagram illustrating the data structure of three-dimensional gas distribution image data DTgas. As illustrated in Fig. 15(b), the three-dimensional gas distribution image data DTgas is the three-dimensional voxel data representing the three-dimensional space, and includes gas concentration data Dst (%) of voxels arranged at coordinates in the X direction, the Y direction, and the Z direction, and may further include gas flow velocity vector data Vc (Vx, Vy, Vz) of the voxels.

The two-dimensional single viewpoint gas distribution image conversion processing unit 313 inputs and acquires the three-dimensional gas distribution image data DTgas of the gas leaking from the gas leakage source into the three-dimensional space, and further acquires the condition parameter CP2 necessary for the conversion processing into the two-dimensional single viewpoint gas distribution image according to the operation input from the operator to the operation input unit 35. The condition parameter CP2 is, for example, the parameter related to the capturing condition of the gas visualization imaging device, such as an imaging device angle of view, a line-of-sight direction, the distance, and an image resolution as described in Table 1. Then, the two-dimensional single viewpoint gas distribution image conversion processing unit 313 converts the three-dimensional gas distribution image data DTgas into two-dimensional gas distribution image data observed from a predetermined viewpoint position. As a result, processing of converting into concentration length product image data DTdt as the two-dimensional gas distribution image data is performed.

The concentration length product image DTdt is the image corresponding to the inspection image of the leaked gas acquired by the gas visualization imaging device 10, and is the image representing how the gas is viewed from the viewpoint. Furthermore, by considering the information of the three-dimensional structure data DTstr, it is possible to generate the gas concentration length product image data DTdt that does not represent the gas image that is blocked by the structure and cannot be observed from the viewpoint.

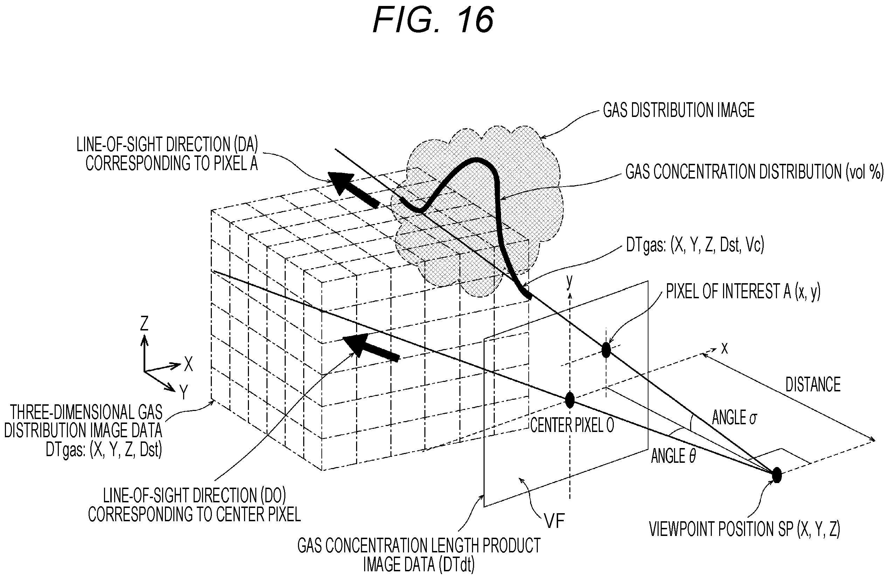

Fig. 16 is a schematic diagram for explaining the outline of the calculation method of the concentration length product in a three-dimensional single viewpoint gas distribution image conversion processing, and is a conceptual diagram of the method of generating the gas concentration length product image data DTdt from the three-dimensional gas distribution image data DTgas of the gas indicating behavior of the gas.

The two-dimensional single viewpoint gas distribution image conversion processing unit 313 generates a plurality of values of the concentration length products Dst obtained by spatially integrating the three-dimensional gas concentration image indicated by the three-dimensional gas distribution image data DTgas in the line-of-sight direction from a predetermined viewpoint position (X, Y, Z) while changing angles $\theta$ and $\sigma$ in the line-of-sight direction, and two-dimensionally arranges the obtained values of the concentration length products Dst to generate the concentration length product image data DTdt.

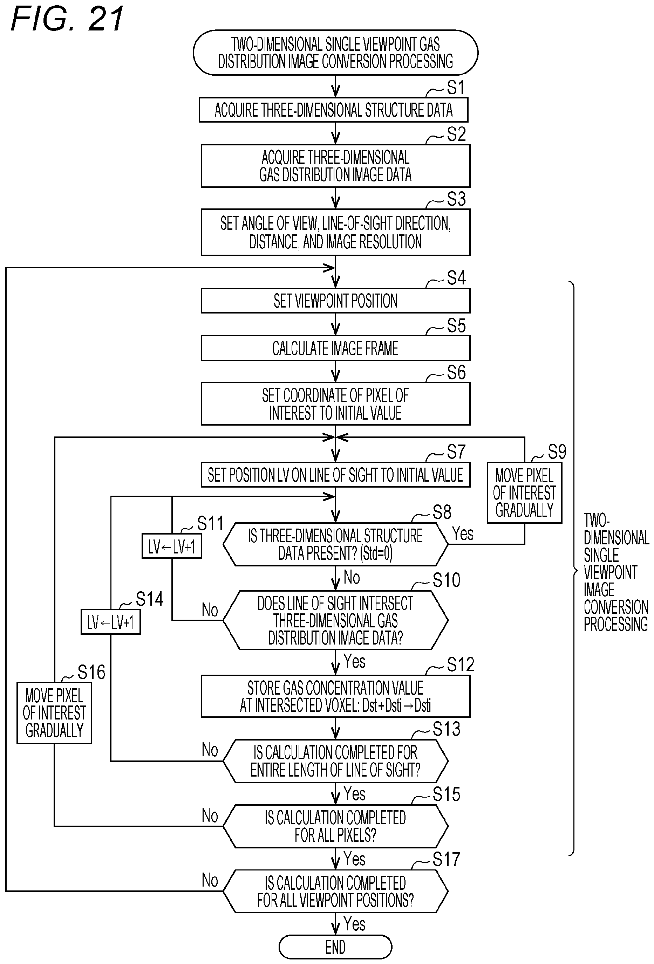

Specifically, as illustrated in Fig. 21, an arbitrary viewpoint position SP (X, Y, Z) is set in the three-dimensional space, and a virtual image plane VF is set at the position separated from the viewpoint position SP (X, Y, Z) by a predetermined distance in the direction of the three-dimensional gas concentration image indicated by the three-dimensional gas distribution image data DTgas. At this time, the virtual image plane VF is set such that a center O intersects the viewpoint position SP (X, Y, Z) and a straight line passing through the center voxel of the three-dimensional gas distribution image data DTgas. In addition, an image frame of the virtual image plane VF is set according to the angle of view of the gas visualization imaging device 10. Then, a line-of-sight direction DA from the viewpoint position SP (X, Y, Z) toward a pixel of interest A (x, y) on the virtual image plane VF is the direction inclined by the angle $\theta$ in the X direction and the angle in the Y direction with respect to a line-of-sight direction DO toward the center pixel O, that is, the line-of-sight direction DO of the gas visualization imaging device.

Along the line-of-sight direction DA corresponding to the pixel of interest A (x, y), the gas concentration distribution data corresponding to the voxel of the three-dimensional gas distribution image intersecting the line of sight is spatially integrated in the line-of-sight direction DA with respect to the voxel intersecting the line of sight, thereby calculating the value of the gas concentration length product regarding the pixel of interest A (x, y). Then, the position of the pixel of interest A (x, y) is gradually moved while the angles $\theta$ and $\sigma$ are changed according to the angle of view of the gas visualization imaging device 10, and the calculation of the value of the gas concentration length product is repeated with all the pixels on the virtual image plane VF as the pixels of interest A (x, y), whereby the concentration length product image data DTdt is calculated.

Furthermore, a plurality of pieces of concentration length product image data DTdt can be easily generated from one fluid simulation by generating the concentration length product image data DTdt while varying the viewpoint position SP (X, Y, Z) using the same three-dimensional gas distribution image data DTgas.

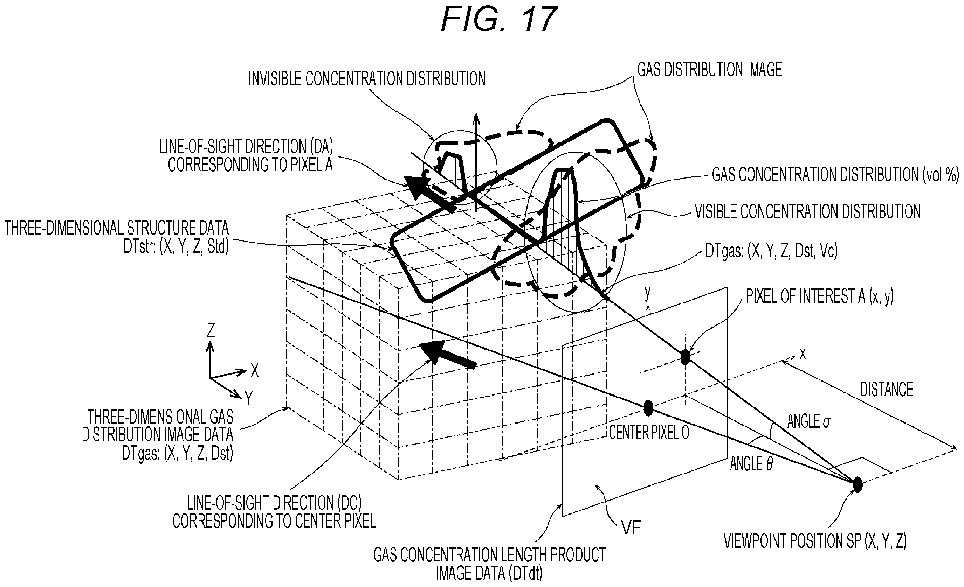

Fig. 17 is a schematic diagram for explaining the outline of the calculation method of the concentration length product under the condition that the structure exists in the three-dimensional single viewpoint gas distribution image conversion processing, and illustrates the case where observation cannot be performed from the gas visualization imaging device 10 due to being blocked by the structure.

In this case, the value of the gas concentration length product is calculated for the pixel of interest A (x, y) by the method of not performing spatial integration of the gas concentration distribution existing behind the structure as viewed from the viewpoint position SP (X, Y, Z) in consideration of the three-dimensional position of the structure.

Specifically, the value of the gas concentration length product regarding the pixel of interest A (x, y) is calculated by performing spatial integration from the viewpoint position SP (X, Y, Z) in the line-of-sight direction DA corresponding to the pixel of interest A (x, y).

Then, the gas concentration length product image DTdt that does not represent the gas image that is blocked by the structure and cannot be observed from the viewpoint is generated by repeating the calculation of the values of the gas concentration length products in consideration of the three-dimensional position of the structure for all the pixels on the virtual image plane VF.

[Generation of optical absorption coefficient image data]

Next, the time-series data of the concentration length product image is converted into the time-series data of the optical absorption coefficient image using the spectral absorption coefficient data of the gas type set at the time of simulation.

The optical absorption coefficient image conversion unit 314 acquires the condition parameter CP3 according to the operation input, further converts the gas concentration length product image data DTdt into an optical absorption coefficient image data DT$\alpha$, and outputs the optical absorption coefficient image data DT$\alpha$ to the subsequent stage.

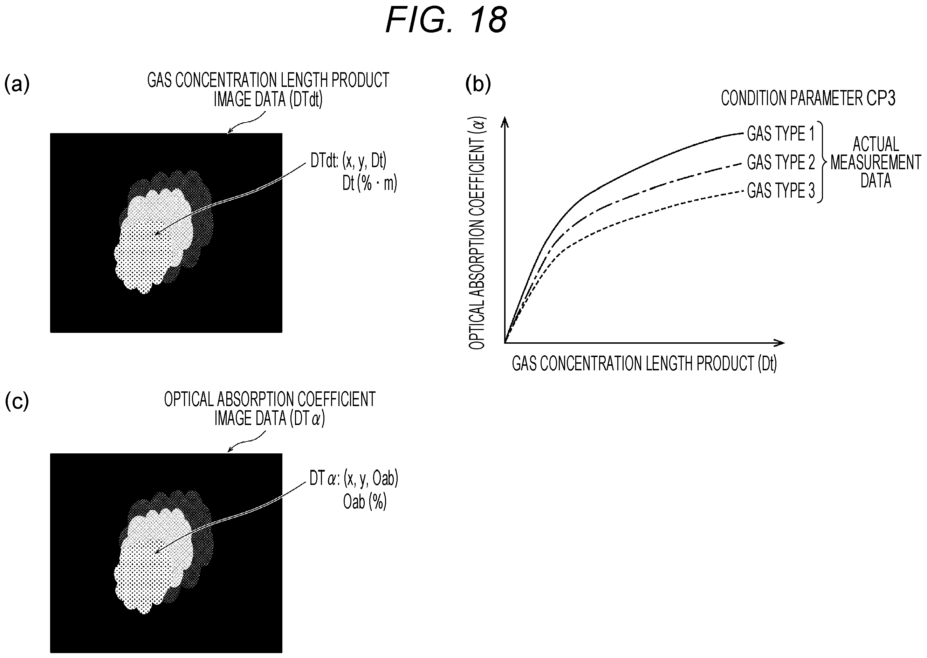

Fig. 18(a) is a schematic diagram illustrating the outline of the concentration length product image data, Fig. 18(b) is a schematic diagram for explaining the outline of the calculation method of the concentration length product in the optical absorption coefficient image conversion processing, and Fig. 18(c) is a schematic diagram illustrating the outline of the optical absorption coefficient image data.

The machine learning data generation device 30 calculates a value $\alpha$ of the optical absorption coefficient corresponding to the gas concentration length product in a pixel (x, y) illustrated in Fig. 18(c) using the relationship between the gas concentration length product and the optical absorption coefficient $\alpha$ as illustrated in Fig. 18(b) with respect to a value Dt of the gas concentration length product in the pixel (x, y) in the gas concentration length product image data DTdt illustrated in Fig. 18(a). The optical absorption coefficient $\alpha$ varies depending on the gas type designated by the condition parameter CP3, and the gas concentration length product image data DTdt and the concentration length product value are converted into the optical absorption coefficient image data Dt$\alpha$ based on the optical absorption characteristics of the gas based on the relationship data between the value Dt of the concentration length product and the optical absorption coefficient $\alpha$, for example, the value of the optical absorption coefficient $\alpha$ corresponding to the value Dt of the gas concentration length product stored in a data table or the like, a mathematical expression representing an approximate curve, or the like. The relationship between the value Dt of the gas concentration length product and the optical absorption coefficient $\alpha$ for each gas type may be acquired in advance by actual measurement.

[Generation of optical intensity image data]

Next, the image corresponding to the captured image is generated using the obtained time-series data of the optical absorption coefficient image and a predetermined background image. The background image includes the same number of frames as the optical absorption coefficient image, and is configured such that the luminance of the image is constant or changes over time. In addition, the pattern in one frame may be full screen fill, or different luminance may be set for each small area.

The optical absorption coefficient can be obtained from the time-series data of the optical absorption coefficient image by the region extraction and an average value processing in a spatial direction and a time direction.

Regarding the gas temperature, the gas temperature used in image generation corresponding to the captured image is used without modification. The above is the method of preparing learning data using the simulation.

The background image generation unit 315 acquires a background portion data PTbk and the condition parameter CP5 according to the operation input, and generates a background image data DTIback.

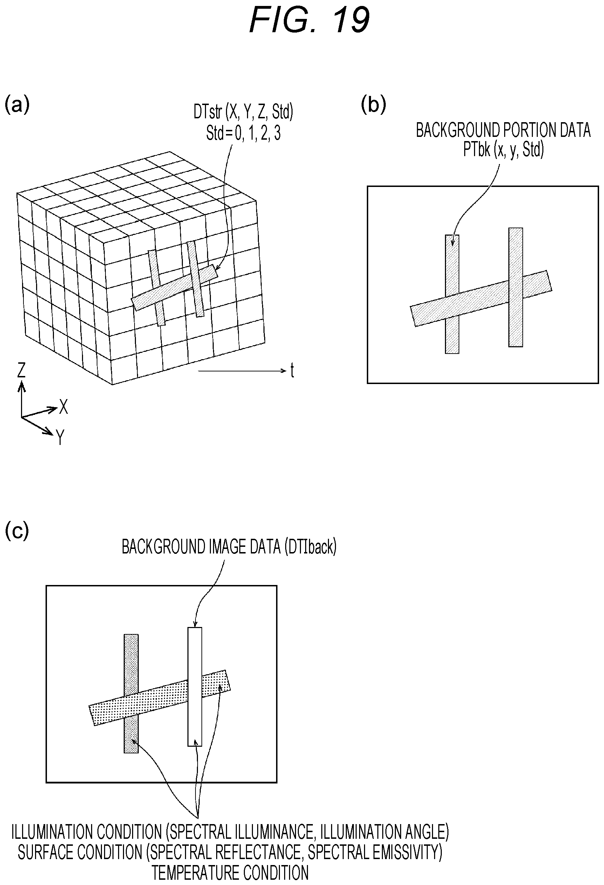

Fig. 19(a) is a schematic diagram illustrating the outline of the three-dimensional structure data. As illustrated in Fig. 19(a), the three-dimensional structure data DTstr is the three-dimensional voxel data representing the three-dimensional space, and unlike the configuration in which the structure identification information Std is stored as a binary image such as "with structure" or "without structure" as the three-dimensional shape data, the structure identification information Std is recorded as a multi-valued image such as 0, 1, 2, 3, and the like by assigning the value indicating classification of the structure surface for each pixel.

As described above, the structure identification information Std including the multi-valued image is subjected to the two-dimensional single viewpoint process in which the virtual image plane VF observed from the viewpoint position SP (X, Y, Z) is used as the image frame, whereby the background portion data PTbk is generated.

Fig. 19(b) is a schematic diagram illustrating the outline of the extracted background portion data PTbk. The background portion data PTbk is the two-dimensional image data including background classification Std (Std = 0, 1, 2, 3, ...) related to the pixel A (x, y) in the virtual image plane VF. Here, the background classification Std is a classification number classified based on, for example, optical characteristics of the structure surface. For example, unpainted piping may be set to 1, painted piping may be set to 2, and concrete may be set to 3.

Fig. 19(c) is a conceptual diagram illustrating a method of generating the background image data DTIback based on the background portion data PTbk. As illustrated in Fig. 19(c), the background image data DTIback is generated based on the background portion data PTbk generated as the multi-valued image and the condition parameter CP5 according to the operation input.

The condition parameter CP5 is an illumination condition for the structure or a temperature condition of the structure itself, such as a background two-dimensional temperature distribution, a background surface spectral emissivity, a background surface spectral reflectance, an illumination light wavelength distribution, a spectral illuminance, and an illumination angle, as described in Table 1. In a case where the background portion data PTbk is the multi-valued image, a different condition parameter CP5 is added for each background classification Std to generate the background image data DTIback. Furthermore, in the case where the background portion data is the binary image, a different condition is applied to each background classification Std with or without the background to generate the background image data DTIback.

The optical intensity image generation unit 316 generates an optical intensity image data DTI based on the optical absorption coefficient image data DT$\alpha$, the background image data DTIback, and the gas temperature condition provided as the condition parameter CP4 according to the operation input.

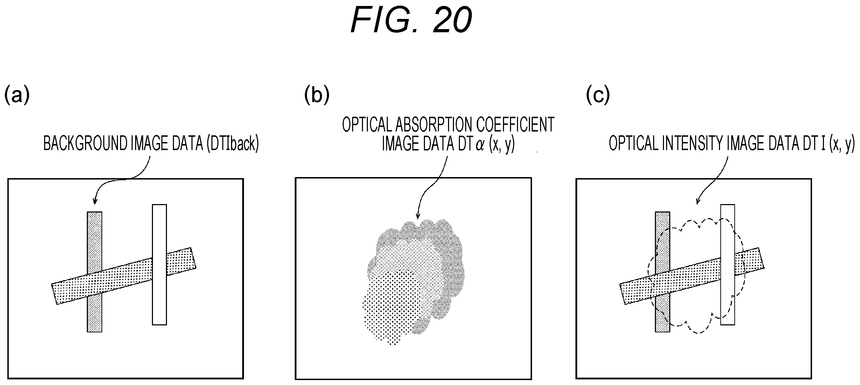

Fig. 20(a) is a schematic diagram illustrating the outline of the background image data DTIback, Fig. 20(b) is a schematic diagram illustrating the outline of the optical absorption coefficient image data DT$\alpha$, and Fig. 20(c) is a schematic diagram illustrating the outline of the optical intensity image data.

Assuming that an infrared intensity at the coordinates (x, y) of the background image is DTIback (x, y), blackbody radiation luminance corresponding to the gas temperature is Igas, and the value of the optical absorption coefficient at the coordinates (x, y) of the optical absorption coefficient image is DT$\alpha$ (x, y), the infrared intensity DTI (x, y) at the coordinates (x, y) of the optical intensity image is calculated by Formula 1.

[Math. 1]

$$DTI (x, y) = DT\alpha (x, y) Igas + [1 - DT\alpha (x, y)] DTIback (x, y) \quad (Formula\ 1)$$

The optical intensity image generation unit 316 calculates the infrared intensity DTI (x, y) at the coordinates (x, y) on the virtual image plane VF using (Formula 1) based on the optical absorption coefficient image data DT$\alpha$, the background image data DTIback, and the temperature condition of the gas. As a result, the sum of the infrared radiation emitted by the structure functioning as the background and the infrared radiation emitted by the gas present in the voxel of the three-dimensional gas distribution image intersecting the line of sight can be calculated along the line-of-sight direction DA corresponding to the pixel of interest A (x, y).

Then, the infrared intensity DTI (x, y) is calculated as all the pixels A (x, y) on the virtual image plane VF, and the optical intensity image data DTI is generated.

(Operation of two-dimensional single viewpoint gas distribution image conversion processing)

Next, a two-dimensional single viewpoint gas distribution image conversion processing operation in the machine learning data generation device 30 will be described with reference to the drawings.

Fig. 21 is a flowchart illustrating the outline of the two-dimensional single viewpoint gas distribution image conversion processing. This processing is executed by the two-dimensional single viewpoint gas distribution image conversion processing unit 313 whose function is configured by the control unit 31.

First, the two-dimensional single viewpoint gas distribution image conversion processing unit 313 acquires the three-dimensional structure data DTstr (step S1), and further acquires three-dimensional gas distribution image data DTgas (step S2). Next, for example, the input of information regarding the imaging device angle of view, the line-of-sight direction, the distance, and the image resolution is received as the condition parameter CP2 according to the operation input (step S3). Furthermore, the viewpoint position SP (X, Y, Z) corresponding to the position of the imaging portion of the gas visualization imaging device 10 is set in the three-dimensional space according to the operation input (step S4).

Next, the virtual image plane VF separated from the viewpoint position SP (X, Y, Z) by the predetermined distance in the direction of the three-dimensional gas concentration image is set, and as described above, the position of the image frame of the virtual image plane VF is calculated according to the angle of view of the gas visualization imaging device 10 (step S5).

Next, the coordinates of the pixel of interest A (x, y) are set to an initial value (step S6), and a position LV on the line of sight from the viewpoint position SP (X, Y, Z) toward the pixel of interest A (x, y) on the virtual image plane VF is set to the initial value (step S7).

Next, it is determined whether or not the structure identification information Std of the voxel of the three-dimensional structure data DTstr intersecting the line of sight represents "without structure" (Std = 0) (step S8). In the case where the structure identification information Std is "with structure", the position of the pixel of interest A (x, y) is gradually moved (step S9), then the process returns to step S7. In the case where the structure identification information Std is not "with structure", the process proceeds to step S10.

In step S10, it is determined whether or not there is the voxel of the three-dimensional gas distribution image data DTgas intersecting the line of sight. In the case where there is no voxel of the three-dimensional structure data DTstr intersecting the line of sight, the position LV on the line of sight is incremented by a unit length (for example, 1) (step S11), then the process returns to step S8. In the case where there is the voxel intersecting the line of sight, the concentration length value Dst of the voxel is read, and the sum of the concentration length value Dst and an integrated value Dsti stored in an addition register or the like is stored as a new integrated value Dsti in the addition register or the like (step S12).

Next, it is determined whether or not the calculation is completed for the entire length of the line of sight corresponding to the range where the line of sight and the voxel intersect with each other (step S13). In the case where the calculation is not completed, the position LV on the line of sight is incremented by the unit length (step S14), then the processing returns to step S8. In the case where the calculation is completed, the gas concentration distribution data of the voxel of the three-dimensional gas distribution image intersecting with the line of sight is spatially integrated along the line-of-sight direction DA corresponding to the pixel of interest A (x, y), and the value of the gas concentration length product regarding the pixel of interest A (x, y) is calculated.

Next, it is determined whether or not the calculation of the gas concentration length product values is completed for all the pixels on the virtual image plane VF (step S15). In a case where the calculation is not completed, the position of the pixel of interest A (x, y) is gradually moved (step S16), and the process returns to step S7. In a case where the calculation is completed, the gas concentration length values are calculated for all the pixels on the virtual image plane VF, and a gas concentration length product image DTdt is generated as two-dimensional gas distribution image data regarding the virtual image plane VF.

Next, it is determined whether or not generation of the gas concentration length product image DTdt is completed for all viewpoint positions SP (X, Y, Z) to be calculated (step S17). If not completed, the process returns to step S4, and the gas concentration length product image DTdt is generated for a new viewpoint position SP (X, Y, Z) for which the operation has been input. If completed, the process is terminated.

(Operation of background image generation processing)

Next, a background image generation processing operation in the machine learning data generation device 30 will be described with reference to the drawings.

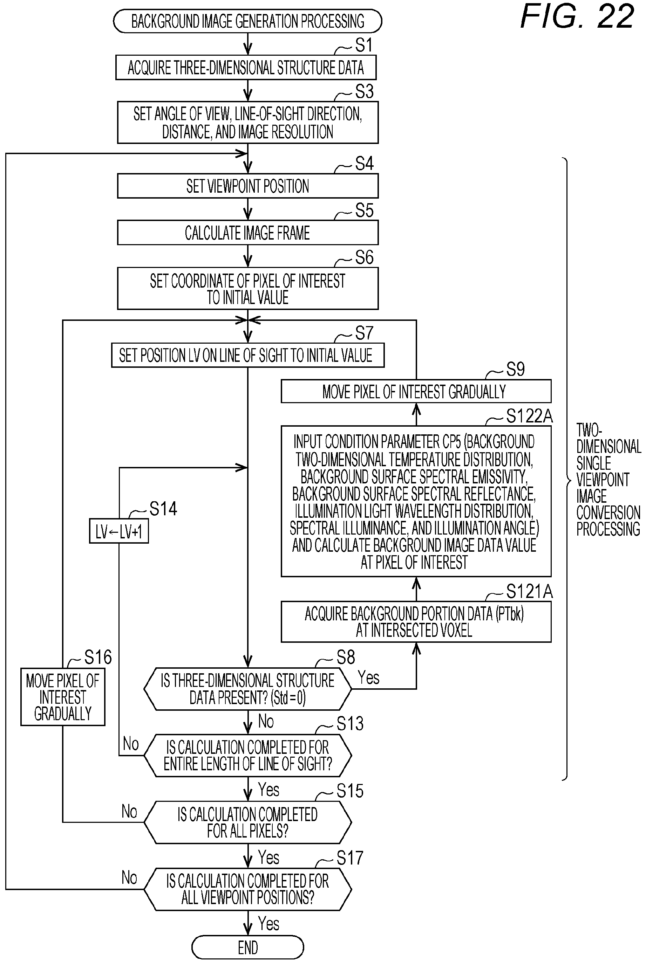

Fig. 22 is a flowchart illustrating the outline of the background image generation processing. The processing is executed by the background image generation unit 315 whose function is configured by the control unit 31.

First, the background image generation unit 315 acquires the three-dimensional structure data DTstr (step S1). The operation of steps S3 to S8 is the same as the operation of each step in Fig. 2111.

In step 8, when the background portion data PTbk of the voxel intersecting the line of sight is "with structure", the background classification Std of the background portion data PTbk is acquired (step S121A), and the condition parameter CP5 corresponding to the background classification Std is input (step S122A). After the background image data value in the pixel of interest A is determined, the position of the pixel of interest A (x, y) is gradually moved (step S9), then the process returns to step S7.

The condition parameter CP5 is, for example, conditions such as the background two-dimensional temperature distribution, the background surface spectral emissivity, the background surface spectral reflectance, the illumination light wavelength distribution, the spectral illuminance, and the illumination angle.

On the other hand, when it is not "with structure", it is determined whether or not the calculation is completed for the entire length of the line of sight corresponding to the range in which the line of sight and the voxel intersect (step S13). In the case where the calculation is not completed, the position LV on the line of sight is incremented by the unit length (step S14), then the process returns to step S8. On the other hand, in the case where the calculation is completed, the standard value set in the case where there is no structure is determined as the background image data value in the pixel of interest A, and it is determined whether or not the calculation is completed for all the pixels on the virtual image plane VF (step S15). In the case where the calculation is not completed, the position of the pixel of interest A (x, y) is gradually moved (step S 16), then the process returns to step S7. In the case where the calculation is completed, the process is terminated. Here, the standard value set in the case where there is no structure is, for example, the background image data value corresponding to ground or sky in a real space. The standard value can be obtained by appropriately setting the condition indicated by the condition parameter CP5.

As described above, the background classification Std of the background portion data PTbk is acquired for all the pixels on the virtual image plane VF, and the background image data DTIback related to the virtual image plane VF is generated.

(Operation of optical intensity image data generation processing)

Next, an optical intensity image data generation processing operation in the machine learning data generation device 30 will be described with reference to the drawings.

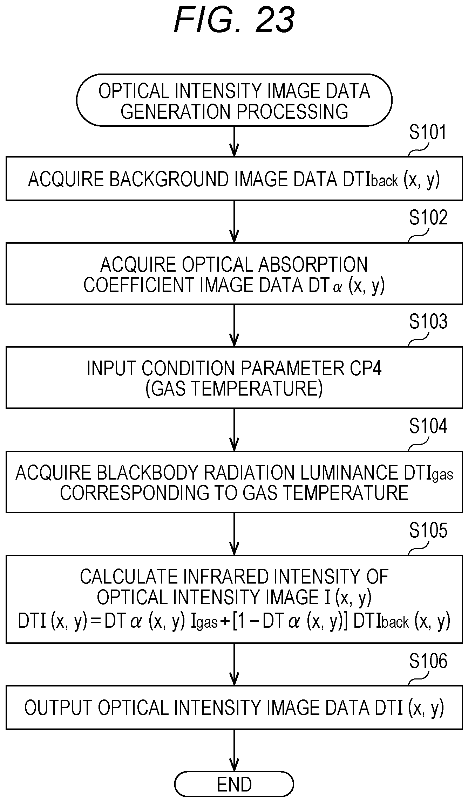

Fig. 23 is a flowchart illustrating the outline of optical intensity image data generation processing.

First, the background image data DTIback (x, y) related to the virtual image plane VF and the optical absorption coefficient image data DT$\alpha$ (x, y) are acquired (steps S101 and 102), and the condition parameter CP4 related to the gas temperature condition is input (step S103).

Next, the blackbody radiation luminance Igas corresponding to the gas temperature is acquired (step S104). The infrared intensity DTI (x, y) of the optical intensity image is calculated by (Formula 1) (step S105) and output as the optical intensity image data DTI (step S106), then the process is terminated.

(Summary)

As described above, the optical intensity image data DTI generated by the machine learning data generation device 30 can be used as the gas distribution moving image, and the gas concentration feature quantity calculated from the optical absorption coefficient image data Dt$\alpha$ or the gas concentration length product image DTdt can be used as the training data for the machine learning used in the gas concentration feature quantity estimation device 20.

As a result, in order to learn by the machine learning model in the gas concentration feature quantity estimation device 20 according to the present embodiment, for example, it is possible to efficiently generate several tens of thousands of sets of learning data including the input and a correct output, such as the gas leakage image and the gas leakage source position coordinate information in the present example, and it is possible to contribute to an improvement of the learning accuracy.

Furthermore, it is possible to generate training data closer to the inspection image by generating the optical absorption coefficient image data DT$\alpha$ closer to the gas distribution image obtained by the gas visualization imaging device 10 as the training data. This can contribute to further improvement in the learning accuracy in the machine learning model.

In addition, it is possible to generate training data closer to the inspection image and to easily extract the target gas portion by generating the optical intensity image data DTI of an aspect more similar to the gas distribution image obtained by the gas visualization imaging device 10 as the training data. This can contribute to further improvement in the learning accuracy in the machine learning model in a gas leakage detection device.

<<General overview>>

A gas concentration feature quantity estimation device according to an aspect of the present disclosure includes: an inspection data acquisition unit that acquires time-series pixel group inspection data of a gas distribution moving image, and a temperature value of a gas, the time-series pixel group inspection data being region-extracted from inspection data of the gas distribution moving image representing an existence region of the gas in a space, and having two or more pixels in a vertical direction and a horizontal direction, respectively; and an estimation unit that calculates a gas concentration feature quantity corresponding to the time-series pixel group inspection data acquired by the inspection data acquisition unit using an inference model, the inference model being machine-learned using time-series pixel group training data of the gas distribution moving image having the same size as the time-series pixel group inspection data, and a gas temperature value and a value of the gas concentration feature quantity corresponding to the time-series pixel group training data as training data. Furthermore, the time-series pixel group inspection data may include the smaller number of frame pixels than the number of frame pixels of the gas distribution moving image.

With this configuration, it is possible to reduce the influence of the mechanical vibration noise on the measurement, and accurately detect the feature quantity representing the gas concentration in the space from the infrared gas distribution moving image.

Another aspect provides a configuration in which the time-series pixel group inspection data may include three or more and seven or less pixels in the vertical and horizontal directions, respectively, in any one of the above aspects.

Still another aspect provides the configuration in which the time-series pixel group training data may be a moving image including vibration noise in any one of the above aspects. In addition, still another aspect provides the configuration in which the gas concentration feature quantity may be an optical absorption coefficient, and the gas concentration feature quantity estimation device may further include a conversion unit that converts the optical absorption coefficient corresponding to the time-series pixel group inspection data into a concentration length product value related to a gas type based on a relationship characteristic between the optical absorption coefficient and the concentration length product of the gas type in any one of the above aspects.

With this configuration, it is possible to calculate the optical absorption coefficient independent of the gas type as the gas concentration feature quantity, and obtain the concentration length product in the specific gas type based on the calculated optical absorption coefficient.

Still another aspect provides the configuration in which the gas concentration feature quantity may be a gas concentration length product in any one of the above aspects.

With this configuration, it is possible to directly obtain the concentration length product in which a specific gas type is specified as the gas concentration feature quantity, and it is possible to improve the accuracy and simplify the calculation in the case where the gas type is determined.

Still another aspect provides the configuration in which the gas distribution moving image may be an image captured by an imaging device in any one of the above aspects.

In addition, still another aspect provides the configuration in which training data of the gas distribution moving image may be generated by simulation in any one of the above aspects.

With this configuration, it is possible to efficiently generate the about several tens of thousands of sets of learning data including the input and the correct output, and contribute to the improvement of the learning accuracy.

Still another aspect provides the configuration in which training data of the gas distribution moving image may be generated from a background image and the optical absorption coefficient in any one of the above aspects.

With this configuration, it is possible to generate the training data closer to the inspection image using the optical absorption coefficient image closer to the gas distribution image obtained by the gas visualization imaging device. This can contribute to further improvement in the learning accuracy in the machine learning model.

Still another aspect provides the configuration in which the number of frames in the time-series pixel group inspection data or the time-series pixel group training data may be larger than the number of pixels in the vertical or the horizontal direction in each frame in any one of the above aspects.

With this configuration, it is possible to distinguish the luminance change due to the mechanical vibration noise and the luminance change due to the gas flow by using the time-series information including the plurality of pixel groups. As a result, it is possible to reduce the influence of the mechanical vibration noise by performing machine learning using the information of the number of pixels that can determine whether the timing is aligned due to the mechanical vibration noise or the phase is not aligned due to the influence of the flow of gas.

Still another aspect provides the configuration in which the gas concentration feature quantity corresponding to the time-series pixel group inspection data may be a sequence of numbers including values calculated for each frame of the time-series pixel group inspection data in any one of the above aspects.

In addition, still another aspect provides the configuration in which the gas concentration feature quantity corresponding to the time-series pixel group inspection data may be an average value of values calculated for each frame of the time-series pixel group inspection data in any one of the above aspects.

With this configuration, the calculation of the gas concentration feature quantity estimation can be simplified.

Still another aspect provides the configuration in which the imaging device may be an infrared camera in any one of the above aspects.

A gas concentration feature quantity estimation method according to an aspect of the present disclosure may include the steps of: acquiring time-series pixel group inspection data of a gas distribution moving image, and a temperature value of a gas, the time-series pixel group inspection data being region-extracted from inspection data of the gas distribution moving image representing an existence region of the gas in a space, and having two or more pixels in a vertical direction and a horizontal direction, respectively; and calculating an estimation value of a gas concentration feature quantity corresponding to the time-series pixel group inspection data acquired using an inference model, the inference model being machine-learned using time-series pixel group training data of the gas distribution moving image having the same size as the time-series pixel group inspection data, and a gas temperature value and a value of the gas concentration feature quantity corresponding to the time-series pixel group training data as training data.

With this configuration, it is possible to realize the gas concentration feature quantity estimation method capable of reducing the influence of the mechanical vibration noise on the measurement and accurately detecting the feature quantity representing the gas concentration in the space from the infrared gas distribution moving image.

A program according to an aspect of the present disclosure includes program instructions for causing a computer to execute a gas concentration feature quantity estimation processing, and the gas concentration feature quantity estimation processing may include functions of: acquiring time-series pixel group inspection data of a gas distribution moving image, and a temperature value of a gas, the time-series pixel group inspection data being region-extracted from inspection data of the gas distribution moving image representing an existence region of the gas in a space, and having two or more pixels in a vertical direction and a horizontal direction, respectively; and

calculating an estimation value of a gas concentration feature quantity corresponding to the time-series pixel group inspection data acquired using an inference model, the inference model being machine-learned using time-series pixel group training data of a gas distribution moving image having the same size as the time-series pixel group inspection data, and a gas temperature value and a value of the gas concentration feature quantity corresponding to the time-series pixel group training data as training data.

A gas concentration feature quantity inference model generation device according to an aspect of the present disclosure may include: a training data acquisition unit that acquires time-series pixel group training data of a gas distribution moving image representing an existence region of a gas in a space, and a gas temperature value and a gas concentration feature quantity value corresponding to the time-series pixel group training data as training data, the time-series pixel group training data having two or more pixels in a vertical direction and a horizontal direction, respectively; and a machine learning unit that configures an inference model to calculate an estimation value of the gas concentration feature quantity corresponding to time-series pixel group inspection data region-extracted from inspection data of a gas distribution moving image and a gas temperature value corresponding to the time-series pixel group inspection data based on the training data, the time-series pixel group inspection data having the same size as the time-series pixel group training data.

With this configuration, it is possible to configure the gas concentration feature quantity inference model capable of reducing the influence of the mechanical vibration noise on the measurement and accurately detecting the feature quantity representing the gas concentration in the space from the infrared gas distribution moving image.

<<Modifications>>

Although the gas concentration feature quantity estimation system 1 according to the embodiment is described above, the present disclosure is not limited to the above embodiment except for essential characteristic constituent elements thereof. For example, the present disclosure also includes a mode obtained by applying various modifications conceived by those skilled in the art to the embodiments, and a mode realized by arbitrarily combining constituent elements and functions of the embodiments without departing from the gist of the present invention. The following will describe modifications of the above-described embodiment as examples of such a mode.

(1) In the above-described embodiment, the configuration in which the gas moving image training data acquired by the gas concentration feature quantity estimation device 20 is generated by simulation using the machine learning data generation device 30 is described as an example. However, an actual image captured by the gas visualization imaging device 10 may be used as the gas moving image training data. In this case, in order to prevent the background image from affecting the concentration length product or the optical absorption coefficient of the gas distribution, it is preferable to capture the gas moving image training image with the black body plate as the background. In this case, the temperature value can be a temperature measurement result of the imaging atmosphere, and the training data of the gas concentration feature quantity can be the value calculated based on the luminance indicated in the gas moving image training image.

(2) In the above-described embodiment, the configuration for machine learning is described as an example in which the weight of the time element is relatively increased while the time element is 100 frames and the pixel element is $4 \times 4$ in the time-series pixel group data. However, the weight of the pixel element may be increased relative to the time element.

(3) In the above-described embodiment, the description is given by exemplifying the gas plant as the gas facility as an example of the inspection image. However, the present disclosure is not limited thereto, and may be applied to generation of the display images in apparatuses, devices, laboratories, research institutes, factories, or offices using gases.

(4) Although the present disclosure is described based on the above embodiments, the present disclosure is not limited to the above embodiments, and the following cases are also included in the present invention.

For example, the present invention may be a computer system including a microprocessor and a memory, in which the memory stores the computer program, and the microprocessor operates according to the computer program. For example, it may be the computer system having the computer program of processing in the system of the present disclosure or the constituent element thereof, and operating according to the program (or instructing each connected part to operate).

The present invention also includes the case where all or a part of the processing in the system or the constituent elements thereof is configured by the computer system including the microprocessor, a recording medium such as a ROM or a RAM, a hard disk unit, and the like. The RAM or the hard disk unit stores the computer program for achieving the same operation as each of the above devices. The microprocessor operates in accordance with the computer program, whereby each device achieves its function.

In addition, some or all of the constituent elements constituting each of the above-described devices may be constituted by one system large scale integration (LSI). The system LSI is a super multifunctional LSI manufactured by integrating a plurality of components on one chip, and is specifically the computer system including the microprocessor, the ROM, the RAM, and the like. These may be individually integrated into one chip, or may be integrated into one chip so as to include a part or all of them. The RAM stores the computer program for achieving the same operation as each of the above devices. The microprocessor operates in accordance with the computer program, whereby the system LSI achieves its functions. For example, the present invention also includes the case where processing in the system or the constituent element thereof is stored as an LSI program, the LSI is inserted into the computer, and a predetermined program is executed.

The circuit integration method is not limited to the LSI, and may be realized by a dedicated circuit or a general-purpose processor. Afield programmable gate array (FPGA) that can be programmed after manufacturing of the LSI or a reconfigurable processor in which connections and settings of circuit cells inside the LSI can be reconfigured may be used.

Furthermore, when a circuit integration technology replacing the LSI appears due to the progress of a semiconductor technology or another derived technology, the functional blocks may be integrated using the technology.

In addition, some or all of the functions of the system or the constituent elements thereof according to each embodiment may be realized by a processor such as the CPU executing the program. This may be a non-transitory computer-readable recording medium in which the program for implementing the operation of the system or the constituent elements thereof is recorded. The program or signal may be recorded on a recording medium and transferred so that the program can be implemented by another independent computer system. Furthermore, it goes without saying that the program can be distributed via a transmission medium such as the Internet.

In addition, the system or each constituent element thereof according to the above embodiments may be configured to be realized by a programmable device such as the CPU, the graphics processing unit (GPU), or the processor, and software. These constituent elements can be one circuit component, or can be an assembly of a plurality of circuit components. In addition, the plurality of constituent elements can be combined to form one circuit component, or can be the assembly of the plurality of circuit components.

(5) The division of the functional blocks is an example, and a plurality of functional blocks may be realized as one functional block, one functional block may be divided into one or more functional blocks, or some functions may be transferred to another functional block. In addition, functions of a plurality of functional blocks having similar functions may be processed in parallel or in a time division manner by single hardware or software.

In addition, the order in which the above steps are executed is for specifically describing the present invention, and may be a different order from the above. In addition, some of the above steps may be executed simultaneously (in parallel) with other steps.

In addition, at least some of the functions of the respective embodiments and the modifications thereof may be combined. Furthermore, the numbers used above are all exemplified to specifically describe the present invention, and the present invention is not limited to the exemplified numbers.

<<Supplement>>

Each of the embodiments described above explains a preferred specific example of the present invention. Numerical values, shapes, materials, constituent elements, arrangement positions and connection forms of the constituent elements, steps, order of the steps, and the like described in the embodiments are merely examples, and are not intended to limit the present invention. Furthermore, among the constituent elements in the embodiments, a step not described in an independent claim indicating the most generic concept of the present invention will be described as an arbitrary constituent element constituting a more preferable mode.

In addition, in order to facilitate understanding of the invention, scales of constituent elements in the drawings described in the above embodiments may be different from actual scales. In addition, the present invention is not limited by the description of each embodiment described above, and can be appropriately changed without departing from the gist of the present invention.

Furthermore, although members such as circuit components and lead wires are also present on a substrate, various aspects of electrical wiring and electrical circuits can be implemented based on common knowledge in the art, and descriptions of these are not made because they are not directly relevant. Each of the drawings described above is a schematic diagram, and is not necessarily strictly illustrated.

Industrial Applicability

The gas concentration feature quantity estimation device, the gas concentration feature quantity estimation method, the program, and the gas concentration feature quantity inference model generation device according to the present disclosure are widely applicable to estimation of the gas concentration feature quantity using the infrared imaging device.

Reference Signs List

| | |
|---|---|
| 1 | gas concentration feature quantity estimation system |
| 10 | gas visualization imaging device |
| 20 | gas concentration feature quantity estimation device |
| 21 | control unit |
| 210 | gas leakage position identification device |
| 211 | inspection image acquisition unit |
| 212 | gas temperature value inspection data acquisition unit |
| 213 | training image acquisition unit |
| 214 | gas feature quantity training data acquisition unit |
| 215 | gas concentration feature quantity estimation unit |
| 2151 | machine learning unit |
| 2152 | learning model retention/inference unit |
| 216 | gas concentration feature quantity output unit |
| 22 | communication circuit |
| 23 | storage device |
| 24 | display |
| 25 | operation input unit |
| 30 | machine learning data generation device |
| 31 | control unit (CPU) |
| 311 | three-dimensional structure modeling unit |
| 312 | three-dimensional fluid simulation execution unit |
| 313 | two-dimensional single viewpoint gas distribution image conversion processing unit |
| 314 | optical absorption coefficient image conversion unit |
| 315 | background image generation unit |
| 316 | optical intensity image generation unit |
| 32 | communication unit |
| 33 | storage unit |
| 34 | display unit |
| 35 | operation input unit |
| 40 | storage means |

**Claims**

1. A gas concentration feature quantity estimation device comprising:

an inspection data acquisition unit that acquires time-series pixel group inspection data and a temperature value of a gas, the time-series pixel group inspection data being region-extracted from inspection data of a gas distribution moving image representing an existence region of the gas in a space, and having two or more pixels in a vertical direction and a horizontal direction, respectively; and
an estimation unit that calculates a gas concentration feature quantity corresponding to the time-series pixel group inspection data acquired by the inspection data acquisition unit using an inference model, the inference model being machine-learned using time-series pixel group training data of the gas distribution moving image having a same size as the time-series pixel group inspection data, and a gas temperature value and a value of the gas concentration feature quantity corresponding to the time-series pixel group training data as training data.

2. The gas concentration feature quantity estimation device according to claim 1, wherein
the time-series pixel group inspection data includes a smaller number of frame pixels than the number of frame pixels of the gas distribution moving image.

3. The gas concentration feature quantity estimation device according to claim 2, wherein
the time-series pixel group inspection data includes three or more and seven or less pixels in the vertical and horizontal directions, respectively.

4. The gas concentration feature quantity estimation device according to any one of claims 1 to 3, wherein the time-series pixel group training data is a moving image including vibration noise.

5. The gas concentration feature quantity estimation device according to any one of claims 1 to 4, wherein

the gas concentration feature quantity is an optical absorption coefficient,
the gas concentration feature quantity estimation device further comprising a conversion unit that converts the optical absorption coefficient corresponding to the time-series pixel group inspection data into a concentration length product value related to a gas type based on a relationship characteristic between the optical absorption coefficient and the concentration length product of the gas type.

6. The gas concentration feature quantity estimation device according to claim 1, wherein the gas concentration feature quantity is a gas concentration length product.

7. The gas concentration feature quantity estimation device according to any one of claims 1 to 6, wherein the gas distribution moving image is an image captured by an imaging device.

8. The gas concentration feature quantity estimation device according to any one of claims 1 to 7, wherein training data of the gas distribution moving image is generated by simulation.

9. The gas concentration feature quantity estimation device according to any one of claims 1 to 8, wherein the training data of the gas distribution moving image is generated from a background image and the optical absorption coefficient.

10. The gas concentration feature quantity estimation device according to any one of claims 1 to 9, wherein the number of frames in the time-series pixel group inspection data or the time-series pixel group training data is larger than the number of pixels in the vertical or the horizontal direction in each frame.

11. The gas concentration feature quantity estimation device according to any one of claims 1 to 10, wherein the gas concentration feature quantity corresponding to the time-series pixel group inspection data is a sequence of numbers including values calculated for each frame of the time-series pixel group inspection data.

12. The gas concentration feature quantity estimation device according to any one of claims 1 to 11, wherein the gas concentration feature quantity corresponding to the time-series pixel group inspection data is an average value of values calculated for each frame of the time-series pixel group inspection data.

13. The gas concentration feature quantity estimation device according to claim 7, wherein the imaging device is an infrared camera.

14. A gas concentration feature quantity estimation method comprising:

acquiring time-series pixel group inspection data of a gas distribution moving image, and a temperature value of a gas, the time-series pixel group inspection data being region-extracted from inspection data of the gas distribution moving image representing an existence region of the gas in a space, and having two or more pixels in a vertical direction and a horizontal direction, respectively; and
calculating an estimation value of a gas concentration feature quantity corresponding to the time-series pixel group inspection data acquired using an inference model, the inference model being machine-learned using time-series pixel group training data of the gas distribution moving image having the same size as the time-series pixel group inspection data, and a gas temperature value and a value of the gas concentration feature quantity corresponding to the time-series pixel group training data as training data.

15. A program for causing a computer to execute a gas concentration feature quantity estimation processing, the gas concentration feature quantity estimation processing including functions of:

acquiring time-series pixel group inspection data of a gas distribution moving image, and a temperature value of a gas, the time-series pixel group inspection data being region-extracted from inspection data of the gas distribution moving image representing an existence region of the gas in a space, and having two or more pixels in a vertical direction and a horizontal direction, respectively; and
calculating an estimation value of a gas concentration feature quantity corresponding to the time-series pixel group inspection data acquired using an inference model, the inference model being machine-learned using time-series pixel group training data of the gas distribution moving image having the same size as the time-series pixel group inspection data, and a gas temperature value and a value of the gas concentration feature quantity corresponding to the time-series pixel group training data as training data.

16. A gas concentration feature quantity inference model generation device comprising:

a training data acquisition unit that acquires time-series pixel group training data of a gas distribution moving image representing an existence region of a gas in a space, and a gas temperature value and a value of gas concentration feature quantity corresponding to the time-series pixel group training data as training data, the time-series pixel group training data having two or more pixels in a vertical direction and a horizontal direction, respectively; and
a machine learning unit that configures an inference model to calculate an estimation value of the gas concentration feature quantity corresponding to time-series pixel group inspection data region-extracted from inspection data of a gas distribution moving image and a gas temperature value corresponding to the time-series pixel group inspection data based on the training data, the time-series pixel group inspection data having the same size as the time-series pixel group training data.

# FIG. 1

1

GAS VISUALIZATION
IMAGING DEVICE
10

N

STORAGE
MEANS
40

GAS CONCENTRATION
FEATURE QUANTITY
ESTIMATION DEVICE
20

STORAGE
LEARNING DATA
GENERATION DEVICE
30

**FIG. 2**

EP 4 357 746 A1

# FIG. 3

20

CONTROL UNIT 21

CPU

RAM

ROM

COMMUNICATION CIRCUIT 22

INTERNET

STORAGE DEVICE 23

DISPLAY 24

OPERATION INPUT UNIT 25

# FIG. 4

(a)

(b)

# FIG. 5

(a)

TIME-SERIES PIXEL GROUP INSPECTION DATA
(4×4 PIXELS×N FRAMES)

TEMPERATURE VALUE:
AVERAGE VALUE OF N FRAMES

GAS DISTRIBUTION MOVING IMAGE (CAPTURED IMAGE) INSPECTION DATA

(b)

TIME-SERIES PIXEL GROUP TRAINING DATA
(4×4 PIXELS×N FRAMES)

OPTICAL ABSORPTION COEFFICIENT:
AVERAGE VALUE OF 4×4 PIXELS×N FRAMES
TEMPERATURE VALUE:
AVERAGE VALUE OF N FRAMES

GAS DISTRIBUTION MOVING IMAGE
(OPTICAL ABSORPTION COEFFICIENT MOVING IMAGE) TRAINING DATA

(c)

OPTICAL ABSORPTION COEFFICIENT:
AVERAGE VALUE OF 4×4 PIXELS×N FRAMES

GAS DISTRIBUTION MOVING IMAGE (CAPTURED IMAGE) INSPECTION DATA

# FIG. 6

(a)

| 0 | 0 | 0 | 0 |
|---|---|---|---|
| 10 | 10 | 20 | 20 |
| 10 | 10 | 20 | 20 |
| 30 | 30 | 40 | 40 |

— PIXEL GROUP

FRAME N

| 0 | 0 | 0 | 0 |
|---|---|---|---|
| 10 | 10 | 20 | 20 |
| 10 | 10 | 20 | 20 |
| 30 | 30 | 40 | 40 |

— PIXEL GROUP

FRAME N
(AFTER 1/3 SECONDS)

| 0 | 0 | 0 | 0 |
|---|---|---|---|
| 10 | 10 | 20 | 20 |
| 10 | 10 | 20 | 20 |
| 30 | 30 | 40 | 40 |

— PIXEL GROUP

FRAME N+2
(AFTER 1/3 SECONDS)

(b)

| 0 | 0 | 0 | 0 |
|---|---|---|---|
| 10 | 10 | 20 | 20 |
| 10 | 10 | 20 | 20 |
| 30 | 30 | 40 | 40 |

— PIXEL GROUP

FRAME N

POSITION SHIFT APPEARS AS
INCREASE IN TEMPERATURE
OF 2°C

SIFTED DOWN BY 0.2 PIXELS

| 2 | 2 | 4 | 4 |
|---|---|---|---|
| 10 | 10 | 20 | 20 |
| 14 | 14 | 24 | 24 |
| 30 | 30 | 40 | 40 |

— PIXEL GROUP

FRAME N
(AFTER 1/3 SECONDS)

POSITION SHIFT APPEARS AS
DECREASE IN TEMPERATURE
OF 2°C

RETURNS TO ORIGINAL POSITION

| 0 | 0 | 0 | 0 |
|---|---|---|---|
| 10 | 10 | 20 | 20 |
| 10 | 10 | 20 | 20 |
| 30 | 30 | 40 | 40 |

— PIXEL GROUP

FRAME N+2
(AFTER 1/3 SECONDS)

EP 4 357 746 A1

# FIG. 7

(a)

PIXEL OF INTEREST

IN CASE OF VIBRATION, TIMINGS OF PEAKS AND VALLEYS (PHASE) ARE IN SYNCHRONIZATION WITH EACH OTHER

LEFT PIXEL

(b)

DIRECTION OF GAS FLOW

PIXEL OF INTEREST

PIXEL GROUP

LEFT PIXEL

DIRECTION OF LUMINANCE CHANGE

# FIG. 8

(a)

(b)

FIG. 9

(a)

(b)

(c)

(d)

# FIG. 10

```
( LEARNING PHASE START )
            │
            │  S110
            ▼
┌─────────────────────────────────────────────────┐
│ CREATE GAS DISTRIBUTION MOVING IMAGE TRAINING DATA│
│ BASED ON THREE-DIMENSIONAL FLUID SIMULATION       │
└─────────────────────────────────────────────────┘
            │
            │  S120
            ▼
┌─────────────────────────────────────────────────┐
│ REGION-EXTRACT TIME-SERIES PIXEL GROUP TRAINING DATA│
│ HAVING PREDETERMINED SIZE (4×4 PIXELS×N FRAMES)    │
│ FROM GAS DISTRIBUTION IMAGE INSPECTION DATA        │
└─────────────────────────────────────────────────┘
            │
            │  S130
            ▼
┌─────────────────────────────────────────────────┐
│ ACQUIRE TIME-SERIES PIXEL GROUP TRAINING DATA,    │
│ TEMPERATURE VALUE, AND OPTICAL ABSORPTION COEFFICIENT│
└─────────────────────────────────────────────────┘
            │
            │  S140
            ▼
┌─────────────────────────────────────────────────┐
│ INPUT DATA SET INCLUDING COMBINATION OF TIME-SERIES│
│ PIXEL GROUP TRAINING DATA OF GAS DISTRIBUTION MOVING IMAGE,│
│ TEMPERATURE VALUE, AND OPTICAL ABSORPTION COEFFICIENT│
└─────────────────────────────────────────────────┘
            │
            │  S150
            ▼
┌─────────────────────────────────────────────────┐
│ EXECUTE MACHINE LEARNING BY INPUTTING DATA TO     │
│ CONVOLUTIONAL NEURAL NETWORK TO CONFIGURE INFERENCE│
│ MODEL FOR ESTIMATING OPTICAL ABSORPTION COEFFICIENT│
└─────────────────────────────────────────────────┘
            │
            ▼
        (   END   )
```

# FIG. 11

```
┌─────────────────────────────────┐
│      OPERATION PHASE START        │
└─────────────────────────────────┘
                  │
                  ▼                          S210
┌─────────────────────────────────────────────┐
│ ACQUIRE GAS DISTRIBUTION MOVING IMAGE          │
│ INSPECTION DATA FROM GAS VISUALIZATION         │
│ IMAGING DEVICE                                 │
└─────────────────────────────────────────────┘
                  │
                  ▼                          S220
┌─────────────────────────────────────────────┐
│ MEASURE TEMPERATURE VALUE OF CAPTURING         │
│ ENVIRONMENT                                    │
└─────────────────────────────────────────────┘
                  │
                  ▼                          S230
┌─────────────────────────────────────────────┐
│ REGION-EXTRACT TIME-SERIES PIXEL GROUP         │
│ INSPECTION DATA HAVING PREDETERMINED SIZE      │
│ (4×4 PIXELS×N FRAMES) FROM GAS DISTRIBUTION    │
│ MOVING IMAGE INSPECTION DATA                   │
└─────────────────────────────────────────────┘
                  │
                  ▼                          S240
┌─────────────────────────────────────────────┐
│ ACQUIRE TIME-SERIES PIXEL GROUP INSPECTION     │
│ DATA AND TEMPERATURE VALUE                     │
└─────────────────────────────────────────────┘
                  │
                  ▼                          S250
┌─────────────────────────────────────────────┐
│ CALCULATE OPTICAL ABSORPTION COEFFICIENT       │
│ ESTIMATION VALUE OF TIME-SERIES PIXEL GROUP    │
│ INSPECTION DATA USING LEARNED MODEL            │
└─────────────────────────────────────────────┘
                  │
                  ▼                          S260
┌─────────────────────────────────────────────┐
│ CONVERT OPTICAL ABSORPTION COEFFICIENT         │
│ ASSUMED VALUE INTO CONCENTRATION LENGTH        │
│ PRODUCT VALUE BASED ON RELATIONSHIP            │
│ CHARACTERISTIC BETWEEN OPTICAL ABSORPTION      │
│ COEFFICIENT OF GAS TYPE AND CONCENTRATION      │
│ LENGTH PRODUCT                                 │
└─────────────────────────────────────────────┘
                  │
                  ▼
┌─────────────────────────────────┐
│             END                   │
└─────────────────────────────────┘
```

# FIG. 12

(a)

(b)

(c)

# FIG. 13

MACHINE LEARNING DATA
GENERATION DEVICE 30

31
CPU
(CONTROL UNIT)

32
COMMUNICATION UNIT

33
STORAGE UNIT 331
PROGRAM

34
DISPLAY
UNIT

35
OPERATION
INPUT UNIT

FIG. 14

# FIG. 15

(a)

DTstr: (X, Y, Z, Std)
Std = 0, 1

Z

X

Y

(b)

DTgas: (X, Y, Z, Dst, Vc)
Dst (%)
Vc = (Vx, Vy, Vz)

Z

X

Y

t = 0, 1, 2, 3, ··· t$_{end}$

# FIG. 16

GAS DISTRIBUTION IMAGE

LINE-OF-SIGHT DIRECTION (DA) CORRESPONDING TO PIXEL A

GAS CONCENTRATION DISTRIBUTION (vol %)

DTgas: (X, Y, Z, Dst, Vc)

y

PIXEL OF INTEREST A (x, y)

Z
X
Y

x

DISTANCE

THREE-DIMENSIONAL GAS DISTRIBUTION IMAGE DATA DTgas: (X, Y, Z, Dst)

CENTER PIXEL O

ANGLE σ

ANGLE θ

LINE-OF-SIGHT DIRECTION (DO) CORRESPONDING TO CENTER PIXEL

VF

VIEWPOINT POSITION SP (X, Y, Z)

GAS CONCENTRATION LENGTH PRODUCT IMAGE DATA (DTdt)

EP 4 357 746 A1

## FIG. 17

INVISIBLE CONCENTRATION DISTRIBUTION

GAS DISTRIBUTION IMAGE

LINE-OF-SIGHT DIRECTION (DA) CORRESPONDING TO PIXEL A

GAS CONCENTRATION DISTRIBUTION (vol %)

VISIBLE CONCENTRATION DISTRIBUTION

THREE-DIMENSIONAL STRUCTURE DATA DTstr: (X, Y, Z, Std)

DTgas: (X, Y, Z, Dst, Vc)

PIXEL OF INTEREST A (x, y)

Z
X
Y

THREE-DIMENSIONAL GAS DISTRIBUTION IMAGE DATA DTgas: (X, Y, Z, Dst)

y

x

CENTER PIXEL O

ANGLE σ

DISTANCE

ANGLE θ

LINE-OF-SIGHT DIRECTION (DO) CORRESPONDING TO CENTER PIXEL

VF

VIEWPOINT POSITION SP (X, Y, Z)

GAS CONCENTRATION LENGTH PRODUCT IMAGE DATA (DTdt)

# FIG. 18

(a)

GAS CONCENTRATION LENGTH PRODUCT
IMAGE DATA (DTdt)

DTdt: (x, y, Dt)
Dt (% · m)

(b)

CONDITION PARAMETER CP3

GAS TYPE 1
GAS TYPE 2  } ACTUAL
MEASUREMENT DATA
GAS TYPE 3

OPTICAL ABSORPTION COEFFICIENT ($\alpha$)

GAS CONCENTRATION LENGTH PRODUCT (Dt)

(c)

OPTICAL ABSORPTION COEFFICIENT
IMAGE DATA (DT$\alpha$)

DT$\alpha$: (x, y, Oab)
Oab (%)

EP 4 357 746 A1

# FIG. 19

(a)

DTstr (X, Y, Z, Std)
Std = 0, 1, 2, 3

Z

X

Y

t

(b)

BACKGROUND PORTION DATA
PTbk (x, y, Std)

(c)

BACKGROUND IMAGE DATA (DTIback)

ILLUMINATION CONDITION (SPECTRAL ILLUMINANCE, ILLUMINATION ANGLE)
SURFACE CONDITION (SPECTRAL REFLECTANCE, SPECTRAL EMISSIVITY)
TEMPERATURE CONDITION

# FIG. 20

(a)

BACKGROUND IMAGE DATA (DTIback)

(b)

OPTICAL ABSORPTION COEFFICIENT
IMAGE DATA DT$\alpha$ (x, y)

(c)

OPTICAL INTENSITY IMAGE DATA DT I (x, y)

# FIG. 21

TWO-DIMENSIONAL SINGLE VIEWPOINT GAS
DISTRIBUTION IMAGE CONVERSION PROCESSING

S1
ACQUIRE THREE-DIMENSIONAL STRUCTURE DATA

S2
ACQUIRE THREE-DIMENSIONAL
GAS DISTRIBUTION IMAGE DATA

S3
SET ANGLE OF VIEW, LINE-OF-SIGHT DIRECTION,
DISTANCE, AND IMAGE RESOLUTION

S4
SET VIEWPOINT POSITION

S5
CALCULATE IMAGE FRAME

S6
SET COORDINATE OF PIXEL OF
INTEREST TO INITIAL VALUE

S7
SET POSITION LV ON LINE OF SIGHT TO INITIAL VALUE

S9
MOVE PIXEL
OF INTEREST
GRADUALLY

S11
LV←LV+1

S8
IS THREE-DIMENSIONAL STRUCTURE
DATA PRESENT? (Std=0)          Yes

No

S10
DOES LINE OF SIGHT INTERSECT
THREE-DIMENSIONAL GAS          No
DISTRIBUTION IMAGE DATA?

S14
LV←LV+1

Yes

S12
STORE GAS CONCENTRATION VALUE
AT INTERSECTED VOXEL: Dst+Dsti→Dsti

S16
MOVE PIXEL
OF INTEREST
GRADUALLY

S13
No          IS CALCULATION COMPLETED FOR
ENTIRE LENGTH OF LINE OF SIGHT?

Yes

S15
No          IS CALCULATION COMPLETED
FOR ALL PIXELS?

Yes

S17
No          IS CALCULATION COMPLETED
FOR ALL VIEWPOINT POSITIONS?

Yes

END

TWO-
DIMENSIONAL
SINGLE
VIEWPOINT
IMAGE
CONVERSION
PROCESSING

*FIG. 22*

```
( BACKGROUND IMAGE GENERATION PROCESSING )
                      │
                      ▼  ~S1
      ACQUIRE THREE-DIMENSIONAL STRUCTURE DATA
                      │
                      ▼  ~S3
      SET ANGLE OF VIEW, LINE-OF-SIGHT DIRECTION,
          DISTANCE, AND IMAGE RESOLUTION
                      │
                      ▼  ~S4
             SET VIEWPOINT POSITION
                      │
                      ▼  ~S5
             CALCULATE IMAGE FRAME
                      │
                      ▼  ~S6
          SET COORDINATE OF PIXEL OF INTEREST
                  TO INITIAL VALUE
                      │
                      ▼  ~S7
      SET POSITION LV ON LINE OF SIGHT TO INITIAL VALUE
```

~S9  MOVE PIXEL OF INTEREST GRADUALLY

~S122A

INPUT CONDITION PARAMETER CP5 (BACKGROUND TWO-DIMENSIONAL TEMPERATURE DISTRIBUTION, BACKGROUND SURFACE SPECTRAL EMISSIVITY, BACKGROUND SURFACE SPECTRAL REFLECTANCE, ILLUMINATION LIGHT WAVELENGTH DISTRIBUTION, SPECTRAL ILLUMINANCE, AND ILLUMINATION ANGLE) AND CALCULATE BACKGROUND IMAGE DATA VALUE AT PIXEL OF INTEREST

~S14  LV←LV+1

~S121A  ACQUIRE BACKGROUND PORTION DATA (PTbk) AT INTERSECTED VOXEL

~S16  MOVE PIXEL OF INTEREST GRADUALLY

~S8  IS THREE-DIMENSIONAL STRUCTURE DATA PRESENT? (Std = 0) — Yes

No

~S13  IS CALCULATION COMPLETED FOR ENTIRE LENGTH OF LINE OF SIGHT? — No

Yes

~S15  IS CALCULATION COMPLETED FOR ALL PIXELS? — No

Yes

~S17  IS CALCULATION COMPLETED FOR ALL VIEWPOINT POSITIONS? — No

Yes

( END )

TWO-DIMENSIONAL SINGLE VIEWPOINT IMAGE CONVERSION PROCESSING

# FIG. 23

```
┌──────────────────────────────────────┐
│  OPTICAL INTENSITY IMAGE DATA         │
│  GENERATION PROCESSING                │
└──────────────────────────────────────┘
                   │              S101
                   ▼
┌──────────────────────────────────────┐
│ ACQUIRE BACKGROUND IMAGE DATA DTIback (x, y) │
└──────────────────────────────────────┘
                   │              S102
                   ▼
┌──────────────────────────────────────┐
│ ACQUIRE OPTICAL ABSORPTION            │
│ COEFFICIENT IMAGE DATA DTα (x, y)     │
└──────────────────────────────────────┘
                   │              S103
                   ▼
┌──────────────────────────────────────┐
│ INPUT CONDITION PARAMETER CP4         │
│ (GAS TEMPERATURE)                     │
└──────────────────────────────────────┘
                   │              S104
                   ▼
┌──────────────────────────────────────┐
│ ACQUIRE BLACKBODY RADIATION LUMINANCE DTIgas │
│ CORRESPONDING TO GAS TEMPERATURE      │
└──────────────────────────────────────┘
                   │              S105
                   ▼
┌──────────────────────────────────────┐
│ CALCULATE INFRARED INTENSITY OF       │
│ OPTICAL INTENSITY IMAGE I (x, y)      │
│ DTI (x, y)=DTα (x, y) Igas+[1−DTα (x, y)] DTIback (x, y) │
└──────────────────────────────────────┘
                   │              S106
                   ▼
┌──────────────────────────────────────┐
│ OUTPUT OPTICAL INTENSITY IMAGE DATA DTI (x, y) │
└──────────────────────────────────────┘
                   │
                   ▼
            ┌─────────────┐
            │     END     │
            └─────────────┘
```

$$DTI(x, y) = DT\alpha(x, y) I_{gas} + [1 - DT\alpha(x, y)] DTI_{back}(x, y)$$

## INTERNATIONAL SEARCH REPORT

| | International application No. |
|---|---|
| | **PCT/JP2022/013879** |

### A. CLASSIFICATION OF SUBJECT MATTER

*G01M 3/02*(2006.01)i; *G06T 7/00*(2017.01)i
FI:   G01M3/02 M; G06T7/00 350B

According to International Patent Classification (IPC) or to both national classification and IPC

### B. FIELDS SEARCHED

Minimum documentation searched (classification system followed by classification symbols)

G01M3/02; G06T7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2017/104607 A1 (KONICA MINOLTA INC) 22 June 2017 (2017-06-22) paragraphs [0022], [0036], [0039], [0046]-[0055], fig. 1-6 | 1-4, 6-8, 13-16 |
| A | paragraphs [0022], [0036], [0039], [0046]-[0055], fig. 1-6 | 5, 9-12 |
| Y | WO 2020/079920 A1 (CHIYODA CORP) 23 April 2020 (2020-04-23) paragraphs [0028]-[0030], [0040] | 1-4, 6-8, 13-16 |
| A | paragraphs [0028]-[0030], [0040] | 5, 9-12 |
| Y | WO 2017/213075 A1 (KONICA MINOLTA INC) 14 December 2017 (2017-12-14) paragraphs [0079]-[0093] | 2-4, 8 |
| A | paragraphs [0079]-[0093] | 1, 5-7, 9-16 |
| A | JP 2019-074777 A (CANON KK) 16 May 2019 (2019-05-16) | 1-16 |
| A | US 2019/0331301 A1 (DU, Yuchuan) 31 October 2019 (2019-10-31) | 1-16 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/013879** |

| Patent document cited in search report | | | Publication date (day/month/year) | Patent family member(s) | | | Publication date (day/month/year) |
| --- | --- | --- | --- | --- | --- | --- | --- |
| WO | 2017/104607 | A1 | 22 June 2017 | US 2018/0364185 A1 paragraphs [0067]-[0068], [0082], [0085]-[0101], fig. 1-6 EP 3372996 A1 | | | |
| WO | 2020/079920 | A1 | 23 April 2020 | US 2021/0232741 A1 paragraphs [0036]-[0038], [0048] AU 2019362683 A | | | |
| WO | 2017/213075 | A1 | 14 December 2017 | US 2020/0041406 A1 paragraphs [0097]-[0111] | | | |
| JP | 2019-074777 | A | 16 May 2019 | (Family: none) | | | |
| US | 2019/0331301 | A1 | 31 October 2019 | GB 2569751 A CN 109743879 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017104617 A1

- JP 2012058093 A